# EUROPÄISCHE PATENTSCHRIFT

(11) **EP 3 683 438 B1**
(45) Veröffentlichungstag und Bekanntmachung des Hinweises auf die Patenterteilung: **13.09.2023**
(21) Anmeldenummer: 20155775.8
(22) Anmeldetag: 17.04.2012
(51) Int. Cl.: F03B 13/06

(54) **PUMPSPEICHERWERK IN EINEM GEWÄSSER UND VERFAHREN ZUM BETRIEB**
PUMP STORAGE UNIT IN A BODY OF WATER AND METHOD OF OPERATION
CENTRALE D'ACCUMULATION PAR POMPAGE DANS UN PLAN D'EAU ET PROCÉDÉ DE FONCTIONNEMENT

(30) Priorität: 19.04.2011 DE 102011002175; 19.08.2011 DE 102011052873
(43) Veröffentlichungstag der Anmeldung: 22.07.2020
(62) Teilanmeldung aus: 12716360.8
(73) Patentinhaber: Roos, Thomas, 99428 Weimar (DE)
(72) Erfinder: Roos, Thomas, 99428 Weimar (DE)
(74) Vertreter: Strehl Schübel-Hopf & Partner

(56) Entgegenhaltungen:
- WO-A1-2009/111861
- DE-A1-102006 003 982
- DE-A1-102008 020 987

## Beschreibung

Im Zuge der Diskussion zum Klimawandel und Atomausstieg wird durch die Politik und Industrie der Ausbau der erneuerbaren Energien, wie z.B. der Windkraftenergie im Offshore-Bereich, die mit im Meer stehenden Windkraftanlagen (z.B. Windrädern) gewonnen wird, gefordert. Dabei stellt sich jedoch das Problem einer effektiven Energiespeicherung. Insbesondere wird dabei diskutiert, dass die Energie in der Nähe der Offshore-Windkraftanlagen nicht mit Pumpspeicherwerken gespeichert werden kann und daher erst mit viel Aufwand und mittels langer Leitungstrassen in die Gebirge gebracht werden muss, um mit dort vorhandenen Pumpspeicherwerken gespeichert zu werden.

Die prinzipielle Wirkungsweise eines Pumpspeicherwerks besteht darin, dass eine Flüssigkeit, typischerweise das Wasser, in Zeiten einer niedrigen Stromnachfrage mittels einer elektrisch angetriebenen Pumpe aus einem Unterbecken in ein höher gelegenes Oberbecken gefördert und bei Strommangel über eine Turbine mit Generator zurück in das Unterbecken abgelassen wird.

Herkömmliche Pumpspeicherwerke nutzen meist künstlich umgebaute Ober- und Unterbecken mit offener Wasseroberfläche (Freispiegel) und sind daher bezüglich des Standortes an bergige Regionen gebunden, wobei selbst dort äußerst wenige geeignete Standorte zur Verfügung stehen.

In DE 10 2008 020 987 A1 wird ein Pumpspeicherkavernenkraftwerk vorgestellt, bei dem eine unterirdische Kaverne natürlichen Ursprungs, z.B. eine ausgesolte Salzkaverne oder eine Erdöl- oder Erdgas-Lagerstätte, im Boden eines natürlichen Gewässers als das Unterbecken genutzt wird und das natürliche Gewässer als das Oberbecken fungiert. Ein solches Pumpspeicherwerk hat zum einen mit einer Verringerung des durch das Herauspumpen des Wassers aus der Kaverne geschaffenen Energiepotentials durch das durch die Kavernenwände wieder hineinströmende Wasser zu kämpfen. Zum anderen ist man auch bei diesem Aufbau in der Wahl des Standorts für das Pumpspeicherwerk wegen der Notwendigkeit einer geeigneten Kaverne stark eingeschränkt.

WO 2009/111861 A1 offenbart ein Pumpspeicherwerk in einem Gewässer, umfassend einen künstlichen wasserdichten, abschließbaren Hohlkörper, eine Be- und Entlüftungsleitung, die den Hohlkörper mit der Oberfläche des Gewässers verbindet, und ein Maschinenhaus mit Anschluss an den Hohlkörper, in welchem eine Pumpe zum Abpumpen des Wassers aus dem Hohlkörper und eine Turbine zur Stromerzeugung beim Fluten des Hohlkörpers mit Wasser angeordnet sind, wobei die Turbine tiefer als die Sohle des Hohlkörpers angeordnet ist.

Die Weiterleitung der beispielsweise in neu errichteten oder ausgebauten Offshore-Windkraftanlagen gewonnenen Energie über zusätzliche Trassen zu den vorhandenen bzw. neu zu errichtenden Pumpspeicherwerken bekannter Art verursacht zum einen erhebliche Leitungsverluste, zum anderen langwierige Genehmigungsverfahren und erhebliche Baukosten.

Darüber hinaus ist davon auszugehen, dass das bereits vorhandene (Stromversorgungs-)Netz anders konzipiert werden muss, um dem unstetigen Strom aus erneuerbaren Energien und den damit verbundenen Netzschwankungen gewachsen zu sein.

Der Erfindung liegt daher die Aufgabe zugrunde, eine Vorrichtung und ein Verfahren zum Speichern und Freigeben der Energie aus einer in einem Gewässer liegenden Kraftanlage, wie z.B. einer Offshore-Windkraftanlage, anzugeben, die sich direkt am Ort der Kraftanlage oder in deren Nähe befinden kann.

Diese Aufgabe wird erfindungsgemäß durch ein Pumpspeicherwerk und ein Verfahren gemäß den beigefügten Patentansprüchen gelöst.

Die Erfindung macht sich die Tatsache zunutze, dass die elektrische Energie direkt am Ort der Stromerzeugung auch im Offshore-Bereich in großen Mengen gespeichert werden kann, und zwar aus den folgenden Gründen:
- Ausreichendes Wasserdargebot, welches als Speichermedium verwendet werden kann,
- Ausreichender hydrostatischer Druck, damit Energie regeneriert werden kann.

Das erfindungsgemäße Pumpspeicherwerk (PSW, im Folgenden bezieht sich diese Abkürzung nur auf die erfindungsgemäßen Anlagen) ist sowohl im Offshore-Bereich als auch in einem natürlichen oder künstlichen Binnengewässer einsetzbar.

Die erfindungsgemäße Konstruktion kann z.B. in Meeresgebieten mit ausreichender Wassertiefe und Nähe zu Offshore-Windparks in einzelnen Modulen auf den Meeresboden abgesenkt, eingespült und ggf. rückverankert werden; die Module können dort miteinander kraftschlüssig verbunden werden. Die von den Offshore-Windparks produzierten Überkapazitäten können im PSW zwischengespeichert und bei Unterkapazitäten im Netz nachgeführt werden. Dies ermöglicht zum einen eine Vergleichmäßigung der Stromeinspeisung ins Netz und zum anderen eine wirtschaftliche Nutzung der gewonnenen Windenergie für die zur Annahme verpflichteten Netzbetreiber z.B. durch das "Zwischenparken" bis zum wirtschaftlichen Weiterverkauf.

Darüber hinaus ist eine Anwendung von kleineren Anlagen, z.B. mit einem oder zwei Maschinensätzen weiter unten spezifizierter Art, auch in tiefen Talsperren möglich. Hier besteht die Möglichkeit, eine Talsperre zur Montage der Module abzusenken und nach der Fertigstellung der Anlage wieder mit Wasser zu füllen. Aber auch im gefüllten Zustand ist eine Montage der Module möglich.

Gegenüber den herkömmlichen Pumpspeicherwerken kann nach der Erfindung auf ein bisher notwendiges nach oben offenes Unterbecken und die damit verbundenen Einschränkungen bezüglich der Lage, der Konstruktion und der Zuverlässigkeit des Pumpspeicherwerks verzichtet werden.

In spezifischen Ausgestaltungen können mehrere voneinander getrennte oder miteinander verbundene Maschinenhäuser vorgesehen sein, in denen beispielsweise Pumpe(n) und Turbine(n) mit Anschluss an unterschiedliche Teile/Abschnitte des Hohlkörpers untergebracht sind.

Bevorzugte Ausführungsformen des PSW sind in den abhängigen Ansprüchen und in der nachfolgenden Beschreibung angegeben.

Ein weiterer Aspekt der Erfindung ist das Verfahren zum Betrieb des erfindungsgemäßen PSW. Das grundsätzliche Funktionsprinzip besteht dabei darin, die Energie über den Einsatz von Pumpen zu speichern und durch Turbinen wieder zu regenerieren. Es besteht auch die Möglichkeit, Pumpturbinen einzusetzen, welche beide Funktionen erfüllen können.

Abweichend vom klassischen Pumpspeicherwerk, welches die Energie in Form von potentieller Energie durch das Heben von Wasser auf ein bestimmtes Höhenniveau speichert, wird bei der erfindungsgemäßen Konstruktion des PSW die Energie durch das Verdrängen von Wasser gegen einen bestimmten hydrostatischen Druck gespeichert. Während beim klassischen Pumpspeicherwerk das Energiepotential über das Höhenniveau des Oberbeckens relativ zu dem Unterbecken abgebildet wird, wird bei dieser Konstruktion das Energiepotential über den anstehenden hydrostatischen Druck (Wassersäule) bestimmt.

Im Folgenden werden einzelne Betriebszustände mit Angabe möglicher vorteilhafter Varianten beschrieben.

Das PSW speichert Energie durch die Verdrängung von Wasser aus einem in sich geschlossenen und wasserdichten künstlichen, absperrbaren Hohlkörper im Boden des Gewässers. Im Folgenden wird als Beispiel der Meeresgrund betrachtet. Bei geringem Energiebedarf wird der Hohlkörper, beispielsweise als ein Tunnel- bzw. Stollensystem ausgebildet, über die Pumpenfunktion der ggf. vorhandenen Pumpturbinen bzw. mittels der Pumpen zumindest teilweise leergepumpt. Dabei entsteht am Meeresgrund ein leergepumpter Hohlraum mit einem hohen Energiepotential. Das ausgepumpte Wasser speichert somit die elektrische Energie als potentielle Energie. Bei hohem Energiebedarf wird der Hohlkörper über die Turbinenfunktion der ggf. vorhandenen Pumpturbinen bzw. mittels der Turbinen zumindest teilweise geflutet, und die gewonnene Energie wird über Generatoren und Transformatoren in das Stromnetz eingespeist. In der Regel sind folgende betriebstechnische Zustände bzw. deren verschiedene Varianten möglich:
- Ausgangszustand (Entladener Energiespeicher): Alle künstlich errichteten Hohlräume (Hohlkörper) am Meeres-/Seegrund, wie z.B. Tunnel, Stollen und Kavernen, sind mit Wasser gefüllt. Alle vorgesehenen Absperrvorrichtungen sind geschlossen. Es liegt kein Stromüberschuss bzw. Überkapazität im Stromnetz vor.
- Schaffung des Energiepotentials durch das Lenzen bzw. Leerpumpen der künstlich errichteten Hohlräume (Laden des Energiespeichers): Es besteht ein Stromüberschuss bzw. Überkapazitäten im Netz. Die Absperrvorrichtungen werden geöffnet. Über die Pumpen bzw. die Pumpfunktion der Pumpturbinen wird das Wasser aus dem Hohlkörper gegen den hydrostatischen Druck über ein Auslaufbauwerk ins Meer gepumpt. Dabei strömt über die Belüftungsleitungen Luft in den Hohlkörper. Gegebenenfalls vorhandene wasserdicht voneinander trennbare Abschnitte des Hohlkörpers, z.B. Tunnel, Stollen und/oder deren Segmente, leeren sich bzw. füllen sich mit Luft. Nach einem vollständigen Lenzen des Hohlkörpers werden die Pumpen abgeschaltet und die Absperrorgane verschlossen. Das maximale Energiepotential des PSW ist erreicht. Dieser Vorgang kann gestaffelt in je künstlich geschaffenem Hohlkörperabschnitt, also ggf. Tunnel für Tunnel, Stollen für Stollen bzw. Kaverne für Kaverne, oder bei extremen Überkapazitäten parallel erfolgen. Ein oder mehrere der ggf. vorhandenen Tunnel oder Stollen können dabei (bei spezifischen Ausgestaltungen) in deren Längsrichtung kontinuierlich abgepumpt und belüftet werden. Dies kann z.B. durch eine gegenüber der Horizontalen leicht ansteigende Anordnung des jeweiligen Tunnels bzw. Stollens erreicht werden, z.B. mit einer Steigung von 10% oder weniger, in folgender Reihenfolge zunehmend bevorzugt: höchstens 6%, höchstens 3%, höchstens 1%. Vorteilhaft ist bei einer solchen Ausgestaltung die Anordnung der jeweiligen Pumpe am tieferen Ende des Tunnels bzw. Stollens, wodurch ein erhöhter Ansaugdruck bis zum Ende des Pumpvorgangs erreicht werden kann.
- Zwischenzustand (Geladener Energiespeicher): Alle künstlich geschaffenen Hohlräume sind gelenzt und mit Luft gefüllt. Alle Absperrvorrichtungen sind geschlossen. Es liegt kein Strommangel bzw. Unterkapazität im Netz vor.
- Entladung des Energiepotentials durch das Fluten der Hohlräume (Entladen des Energiespeichers): Es besteht ein Strommangel bzw. Unterkapazitäten. Die Absperrvorrichtungen werden geöffnet. Über die Turbinenfunktion strömt das Wasser aus dem Meer durch die Einlaufbauwerke mit dem vollen hydrostatischen Druck in den Hohlkörper. Dabei kann die verdrängte Luft über Entlüftungsleitungen aus dem Hohlkörper entströmen. Der Hohlkörper füllt sich mit Wasser. Nach einem vollständigen Fluten werden die Pumpturbinen/Turbinen abgeschaltet und die Absperrorgane verschlossen. Das Energiepotential ist verbraucht. Auch dieser Vorgang kann gestaffelt in je einem künstlichen Hohlraum (bzw. Abschnitt des Hohlkörpers) oder bei extremen Unterkapazitäten parallel in mehreren Abschnitten des Hohlkörpers erfolgen. Die durch die Turbinenfunktion der Pumpturbinen bzw. deren Generatoren erzeugte Energie wird über Transformatoren in das Stromnetz eingespeist. Auch dieser Vorgang kann für einen oder mehrere der ggf. vorhandenen Tunnel oder Stollen in deren Längsrichtung kontinuierlich erfolgen, z.B. in der oben genannten Ausgestaltung mit einer horizontalen Steigung in der Längsrichtung des Tunnels/Stollens.

Von maßgeblicher Bedeutung sind die Wechsel vom statischen (der Hohlkörper oder ggf. einzelne Tunnel bzw. Stollen ist/sind leer bzw. voll) in den dynamischen Betriebszustand (Lenzen bzw. Fluten). Dabei kann zum Einen das Anfahren der Pumpen gegen den hydrostatischen Druck vor dem Lenzen, zum Anderen das Anfahren der Turbinen am Beginn des Flutens sehr genau über die Öffnung der Absperrvorrichtungen gesteuert werden. Beim Lenzen bzw. Leerpumpen kann vorzugsweise der volle hydrostatische Druck auf der Ausgangsseite der Pumpe anliegen; möglich ist z.B. eine Entlastung über die Entlüftungsleitung bis zum Meeressspiegel. Beim Fluten ist es günstig, über die Öffnungsgrade eine Synchronisierung der Turbine zu ermöglichen. Diese Zustände können im Zuge der maschinenbaulichen Planungen bzw. Optimierung der Anlage für die einzelnen Betriebszustände entsprechend den hydraulischen Verhältnissen berücksichtigt und in entsprechenden Fahrkurven hinterlegt werden. Die Steuerung der die Pumpen und die Turbinen enthaltenden Maschinensätze kann mit einer entsprechenden Messtechnik unterstützt werden.

Bevor auf die verschiedenen vorteilhaften Varianten des erfindungsgemäßen PSW, seiner Herstellung und des Betriebs im Detail eingegangen wird, wird vorab eine wichtige erste Ausführungsform mit dem zugehörigen Betriebsverfahren kompakt angegeben:
Diese betrifft vorrichtungsseitig ein PSW im Offshore-Bereich. Das PSW befindet sich am Meeresgrund und besteht im Wesentlichen aus folgenden Komponenten:
- Sternförmiges Tunnel- bzw. Stollensystem in der Art bekannter Meerestunnel, z.B. für Eisenbahn und KFZ-Verkehr mit blindem Ende;
- Zentrale Kaverne, mit Anschluss aller Tunnel bzw. Stollen;
- Maschinensatz in dieser Kaverne, umfassend eine Pumpturbine, einen Generator und einen Transformator je Tunnel bzw. Stollen;
- Versorgungsschacht mit Bedienplattform oberhalb des Meeresspiegels in der Art einer Ölplattform mit einem senkrechten Schacht bis zur Kaverne am Meeresgrund;
- Aus- und Einlaufbauwerk oberhalb der Tunnel- bzw. Stolleneinbindung an der Kaverne am Meeresgrund.

Die Tunnel bzw. Stollen des sternförmig angeordneten Systems haben vorzugsweise eine Mindestlänge von 2 km, eine Breite von 20 m und eine Höhe von 10 m. Das u. g. erste Beispiel rechnet mit 8 Tunneln bzw. Stollen. Dies ergibt eine Speicherkapazität von 3.200.000 m³. Dies entspricht ca. einem Viertel des Nutzvolumens des bekannten herkömmlichen sehr großen Pumpspeicherwerks Goldisthal (12 Mio. m³).

### Arbeitsweise der Vorrichtung:

Das PSW pumpt das Tunnel- bzw. Stollensystem bei geringem Energiebedarf über die Pumpenfunktion der Pumpturbinen leer. Dabei entsteht am Meeresgrund ein Hohlraum mit einem sehr großen Energiepotential. Das ausgepumpte Wasser speichert somit die elektrische Energie als potentielle Energie. Bei hohem Energiebedarf wird das Tunnel- und Stollensystem über die Turbinenfunktion des Maschinensatzes geflutet und die über die Turbinen gewonnene Energie wird über die Generatoren und Transformatoren in das Stromnetz eingespeist.

### Lage:

Dieses PSW kann vorzugsweise in der Nähe von Offshore-Windparks in Meerestiefen größer als 50 m errichtet werden. Die Nord- und Ostsee weisen diese Tiefenverhältnisse im Mittel aus. Es gibt auch tiefere Stellen, dort kann eine größere Leistung erzielt werden.

### Bedarf:

Nach den ersten Abschätzungen werden für die bis 2010/2011 geplanten Offshore-Windparks mindestens ca. 2 herkömmliche Pumpspeicherwerke der Größenordnung Goldisthal benötigt, um allein die befürchteten Netzschwankungen auszugleichen. Ohne Einsatz der Erfindung müsste die Energie über das vorhandene bzw. ausgebaute Stromnetz in die entsprechenden Bergregionen geleitet werden. Erfindungsgemäße Offshore-PSWder beschriebenen Art können diese Spannungsspitzen vor Ort abfangen.

Die Erfindung betrifft unter anderem folgende spezifische Aspekte:
A1. Ein Meeres-Pumpspeicherwerk, umfassend
   - ein sternförmiges Tunnel- bzw. Stollensystem im Meeresgrund,
   - eine zentrale Kaverne im Meeresgrund mit Anschluss aller Tunnel bzw. Stollen,
   - ein in der Kaverne befindlicher Maschinensatz, umfassend eine Pumpturbine, einen Generator und einen Transformator je Tunnel bzw. Stollen,
   - einen Versorgungsschacht, der von der Kaverne ausgehend bis über die Meeresoberfläche reicht und dort einen Bedienungsplattform aufweist,
   - ein Aus- und Einlaufbauwerk oberhalb der Tunnel bzw. Stolleneinbindung an der Kaverne am Meeresgrund.
A2. Ein Verfahren zum Speichern und Freigeben von Energie mit Hilfe eines Meerespumpspeicherwerks nach Aspekt A1, umfassend die Schritte
   - Entleeren des Tunnel- bzw. Stollensystems durch Abpumpen von Wasser mit Hilfe der Pumpturbinen (Energiespeicher-Schritt),
   - Fluten des Tunnel- bzw. Stollensystems mit Hilfe der Turbinenfunktion des Maschinensatzes (Energiefreigabe-Schritt) und
   - Einspeichern der über die Turbinen gewonnenen Energie mit Hilfe der Generatoren und Transformatoren in das Stromnetz.

Weitere Vorteile der Erfindung werden nachfolgend anhand der in der Zeichnung und der zugehörigen Beschreibung dargestellten Ausführungsbeispiele erläutert.

Es zeigen:
- Fig. 1: eine auf dem See- oder Meeresboden aufgesetzte Konstruktion eines Pumpspeicherwerks mit einem Tunnelsystem als Hohlkörper (nicht erfindungsgemäß);
- Fig. 2: eine Untertagekonstruktion des PSW mit einem Stollensystem als Hohlkörper;
- Fig. 3: einen Längsschnitt einer Konstruktion des PSW innerhalb einer Talsperre mit einer wasserseitig angeordneten Kaverne;
- Fig. 4: einen Grundriss einer Konstruktion wie z.B. in Fig. 3;
- Fig. 5: einen Längsschnitt einer Talsperrenkonstruktion mit einer Kaverne innerhalb bzw. unterhalb der Talsperrenmauer;
- Fig. 6: einen Längsschnitt einer Talsperrenkonstruktion mit einer luftseitig angeordneten Kaverne;
- Fig. 7: Grundrisse des erfindungsgemäßen Hohlkörpers in Form eines Tunnel- oder Stollensystems mit sternförmiger (links) und spinnennetzförmiger (rechts) Anordnung;
- Fig. 8: Querschnitte der Ausführungsbeispiele aus Fig. 7;
- Fig. 9: Grundrisse des erfindungsgemäßen Hohlkörpers in Form eines Tunnel- oder Stollensystems mit ringförmiger (links) und schlaufenartiger (rechts) Anordnung;
- Fig. 10: Querschnitte der Ausführungsbeispiele aus Fig. 9;
- Fig. 11: Grundriss des n Hohlkörpers, hergestellt durch das Absenken großer auftriebsgesicherter Behälter oder Kavernen;
- Fig. 12: Querschnitt des Ausführungsbeispiels aus Fig. 11;
- Fig. 13: Querschnittsdarstellung eines Beispiels für die aufgesetzte Bauart des PSW mit einem Tunnelsegment (links) und eines Beispiels für die untertage Bauweise des PSW mit einem Stollensegment (rechts);
- Fig. 14: eine Variante der Abdichte- und Fügetechnologie zwischen Segmenten des Hohlkörpers mit einer dauerelastischen Fuge mit Spanngliedern;
- Fig. 15: eine Variante der Abdichte- und Fügetechnologie zwischen Segmenten des Hohlkörpers mit einer Vergussfuge mit Fugenblech und Verpressschlauch;
- Fig. 16: Querschnitt durch ein Tunnelsegment mit einer Auftriebssicherung;
- Fig. 17: Längsschnitt durch ein Tunnelsegment mit einer Auftriebssicherung;
- Fig. 18: Grundriss einer spezifischen Ausgestaltung des erfindungsgemäßen PSW;
- Fig. 19: Querschnitt einer spezifischen Ausgestaltung des unteren Teils des erfindungsgemäßen PSW (links) und einer spezifischen Ausgestaltung eines Tunnel-/Stollensegments des erfindungsgemäßen Hohlkörpers (rechts);
- Fig. 20: Querschnitt einer (weiteren) spezifischen Ausgestaltung des erfindungsgemäßen PSW in voller Höhe.

### 1. Anordnung des PSW in verschiedenen Gewässer-Umgebungen

Das PSW kann beispielsweise im Offshore-Bereich in verschiedenen Varianten errichtet werden. Dabei befindet sich das Bauwerk unter dem Meeresgrund (z.B. mit einem Stollensystem als dem künstlichen wasserdichten, abschließbaren Hohlkörper).

Wie weiter oben beschrieben, kann eine ggf. kleinere Konstruktion auch innerhalb von Talsperren oder aber in einem See installiert werden. Grundsätzlich sind Fallhöhen von mehr als 25 m besonders günstig, vorzugsweise über 50 m, besonders bevorzugt über 100 m. Diese Einschätzung hängt jedoch im Einzelfall von den natürlichen und wirtschaftlichen Begebenheiten ab und kann auch anders ausfallen.

### Variante 1: Aufgesetzt auf See-/Meeresboden als Tunnelsystem (nicht erfindungsgemäß)

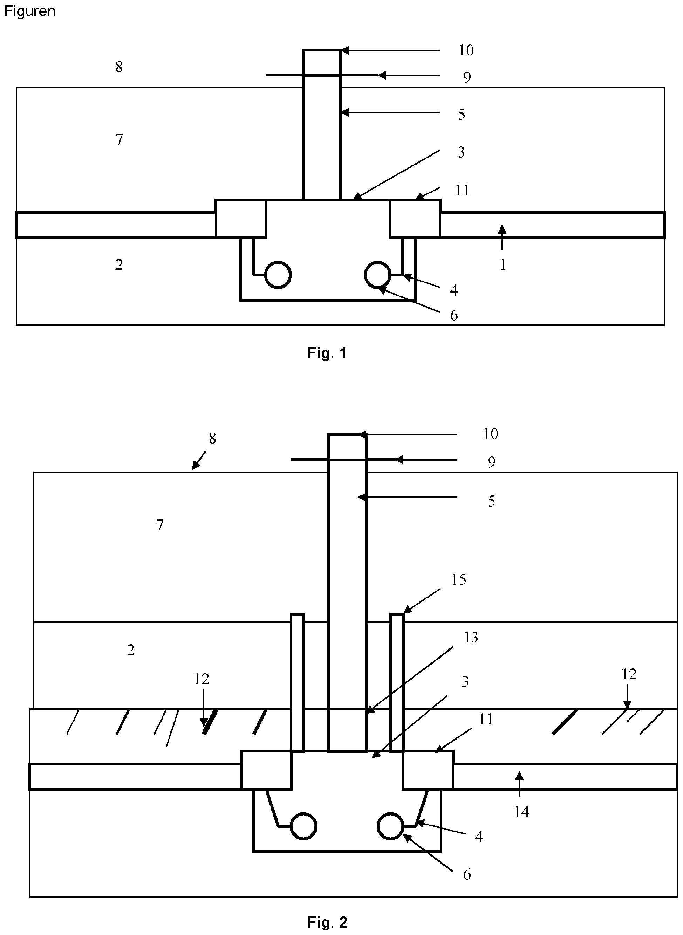

Bei der schematisch in Fig. 1 gezeigten aufgesetzten Variante wird das Speichersystem, also der künstliche wasserdichte, abschließbare Hohlkörper 1 (im Folgenden auch als Speicherkörper und Speichermedium bezeichnet) auf den See-/Meeresgrund bzw. -Boden 2 aufgelegt, oberflächlich eingespült oder dort mit einer Auftriebssicherung fixiert. In Fig. 1 hat der Speicherkörper die Form von (auf dem Meeresboden aufgesetzten) Tunneln 1, die z.B. aus Abschnitten bzw. Segmenten zusammengesetzt sein können. Lediglich ein Maschinenhaus 3 in Form einer zentralen Kaverne 3 mit Anschluss der einzelnen Speicherkörper 1, wie z.B. in der obigen ersten Ausführungsform, wird hier tiefer gegründet, um die Funktion der Pumpen bzw. Pumpturbinen einschließlich deren Saugrohre 4 durch eine Vergrößerung des verfügbaren Ansaugdrucks zu unterstützen. Ein in der zentralen Kaverne 3 befindlicher Maschinensatz 6 weist hier eine Pumpturbine sowie beispielsweise einen Generator und einen Transformator je Tunnel 1 auf.

Eine Toskammer 11 ist zwischen dem Saugrohr 4 und dem Tunnel 1 angeordnet und sorgt unter anderem für die Umwandlung einer turbulenten Strömung im Tunnel 1 in eine weitgehend laminare Strömung. Ferner hat die Toskammer 11 hier die Nebenfunktion, einen ausreichend hohen Wasserstand zurückzuhalten, um einen ausreichenden Pumpenansaugdruck zu gewährleisten.

Ein Wetter- und Versorgungsschacht (Revisionsschacht) 5, in dem unter anderem Be- und Entlüftungsleitungen verlaufen und Werkzeuge sowie Personen zum Zweck einer Revision bzw. Wartung der Tunnel 1 und der Maschinensätze 6 befördert werden können, verbindet die Kaverne 3 mit der Oberfläche des See-/Meereskörpers 7. Über dem Meeresspiegel 8 sind am Wetter- und Versorgungsschacht 5 eine Plattform mit einem Schiffsanleger 9 sowie ein Betriebsgebäude/ eine Betriebshalle 10 vorgesehen. Ein solcher Schacht ist nicht erforderlich, wenn die Revision oder Wartung auch durch Taucher oder auf anderen Wegen bewerkstelligt werden kann.

### Variante 2: Unterhalb des See-/ Meeresgrundes als Stollensystem

Bei einer schematisch in Fig. 2 gezeigten Ausführung unterhalb des See-/ Meeresgrundes bzw. -Bodens 2 wird der Wetter- und Versorgungsschacht 5 in den Meeresboden vorgetrieben, z.B. bis an den Felshorizont, der Klüfte 12 enthalten kann, herangeführt. Gegebenenfalls darüber liegende wasserdurchlässige Schichten, wie z.B. Sandbänke, Schlicksenken usw., sollten hierfür mit geeigneten Spezialtiefbauverfahren, wie z.B. Spül- und Saugtechnik, durchstoßen werden. Für einen ersten dichten Anschluss an den Felshorizont kann unter Wasser mittels spezieller Tauchtechnik weitgehend waagerechtes Planum ausgestemmt werden, um das unterste Segment des Wetter- und Versorgungsschachtes 5 aufzusetzen. Vom Felshorizont aus wird zuerst in die Tiefe gebohrt, welche eine ausreichende Wasserdichtigkeit des anstehenden Gesteins garantieren kann. Dieses senkrechte Schachtstück kann mit einer wasserdichten, druckdichten, rückverankerten Spritzbetonschale ausgerüstet werden, sodass ein abgedichteter Schacht 13 entsteht. Unterhalb dieser Schicht kann dann die zentrale Kaverne 3 ausgefahren werden, von der (z.B. sternförmig) Speicherstollen 14 aufgefahren werden. Aufgrund des Spaltwasserdrucks kann auch bei den Stollen eine druckwasserdichte Schale vorgesehen sein. Auch für die Ein- und Auslaufbauwerke sind hier vorzugsweise entsprechende Zulaufschächte, sogenannte Ein- und Auslaufschächte 15, vorgesehen.

### Variante 3: Innerhalb einer Talsperre

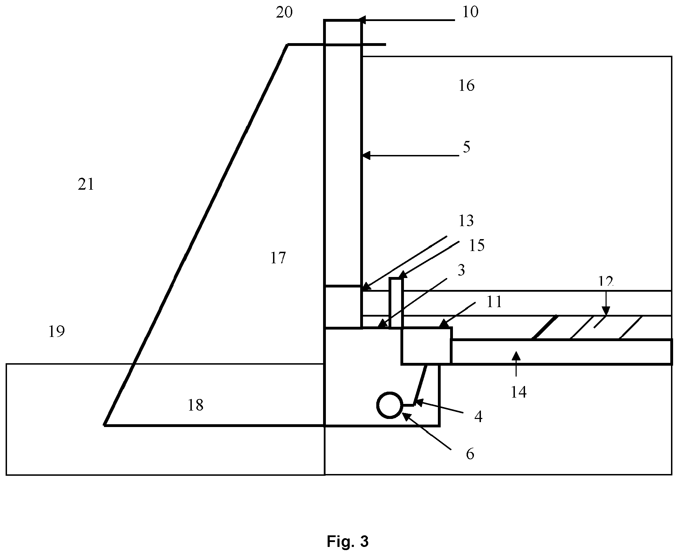

Im Falle einer schematisch in Fig. 3 dargestellten Ausführung im Stauraum 16 einer Talsperre 17 kann sowohl eine aufgesetzte Variante am Grund der Talsperre 17 (Reduktion des Stauraums 16), wie z.B. in Variante 1 dargestellt, als auch die Untertagevariante (kein Einfluss auf den Stauraum 16), wie z.B. in Variante 2 dargestellt, zum Einsatz kommen. Dabei ist zu berücksichtigen, dass es durch den Pumpbetrieb im Unterschied zu Meeresanlagen zu Wasserspiegelschwankungen kommen kann, welche die Bewirtschaftung der Talsperre 17 beeinflussen könnten. Während es bei der aufgesetzten Lösung durch das Volumen der Konstruktion zu einer Reduktion des Stauraums 16 kommt, wird bei der Untertagevariante dem Grunde nach neuer Stauraum geschaffen. Weiterhin ist zu beachten, dass durch die Regelbarkeit des Wasserspiegels nicht zwingend eine Fertigteilbauweise (z.B. in Form eingangs erwähnter einzelner Module) notwendig ist. Vielmehr kann der Wasserstand an die baulichen Notwendigkeiten angepasst und ggf. abgesenkt werden. Das Letztere gilt insbesondere auch für die etwaige Revision bzw. Wartung der unter dem Wasserspiegel liegenden Teile der PSW-Konstruktion, sodass auf einen Wetter- und Versorgungsschacht 5 bis auf eine Be- und Entlüftungsleitung prinzipiell auch verzichtet werden kann.

In Fig. 3 sind ferner neben den in Fig. 1 und Fig. 2 bereits erläuterten Komponenten des PSW eine Gründungssohle 18, ein Mauervorland 19, eine Mauerkrone 20 und eine Luftseite 21 der Talsperre 17 dargestellt. Insbesondere ist hier die zentrale Kaverne 3 mit Anschluss an die aufgefahrenen Stollen 14 wasserseitig bezüglich der Talsperre 17 ausgebildet.

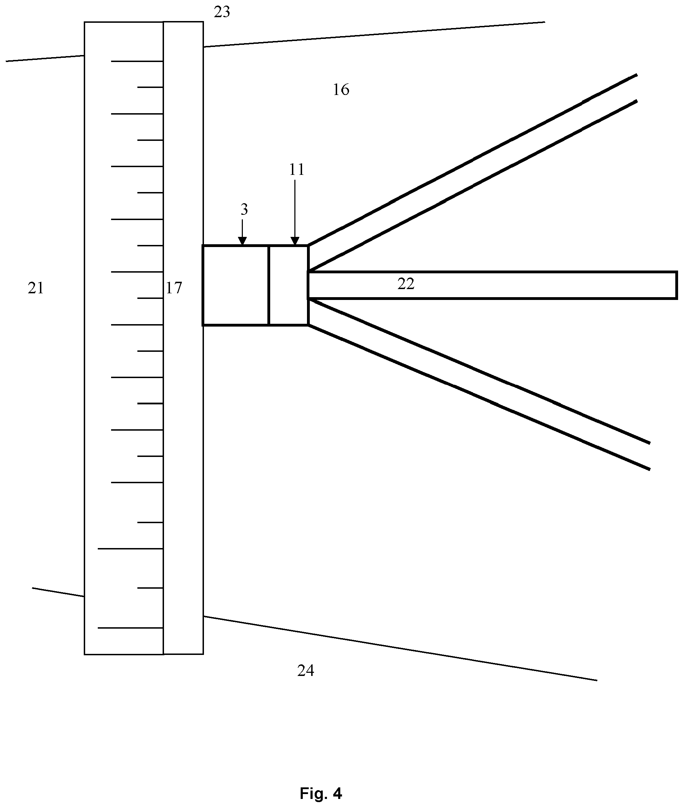

In Fig. 4 ist ein Grundriss einer Talsperrenvariante des PSW mit einer wasserseitigen Kaverne 3, z.B. gemäß der Konstruktion aus Fig. 3, schematisch dargestellt. Neben den in Fig. 3 erläuterten Komponenten sind hier das Stollensystem 22 unterhalb des Stauraums 16 sowie der rechte und der linke Hang 23 bzw. 24 des Stauraums 16 gezeigt.

Neben der in Fig. 3 und Fig. 4 dargestellten wasserseitigen Kavernenlösung sind auch Nutzungen ggf. vorhandener Räume innerhalb der Talsperre 17, wie z.B. von Schieberkammern, bzw. deren Erweiterung möglich. Des Weiteren sind auch luftseitige Kavernen prinzipiell möglich, auch wenn damit ein künstlicher Bypass unterhalb der Talsperre entstehen würde. Vorteil solcher Lösungen ist die Nutzung von bereits vorhandenen Talsperren samt deren Infrastruktur, wie z.B. eines Ein- und Auslaufbauwerks (Bypass zum Grundablass). Die baulichen Eingriffe begrenzen sich dabei auf das Auffahren der Stollen bzw. das Errichten der Tunnel, z.B. aus der Gründung der Mauer heraus, und die Einrichtung der Maschinentechnik innerhalb der Raumerweiterungen. Nachfolgend werden beide diese Varianten kurz an Beispielen dargestellt.

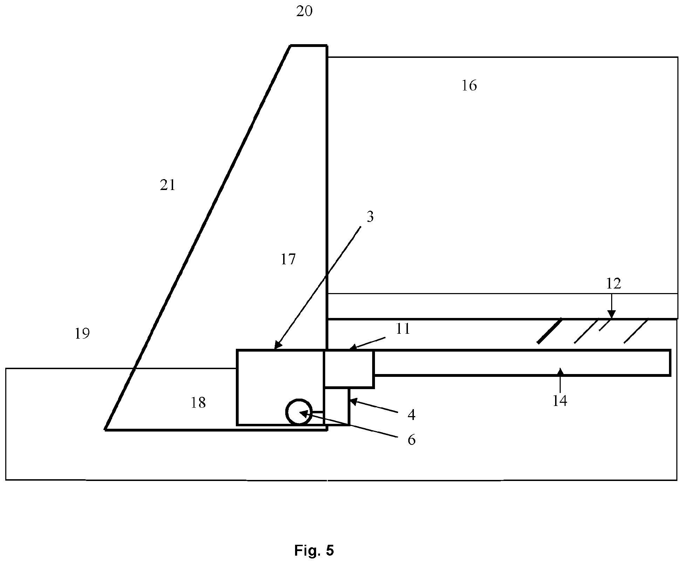

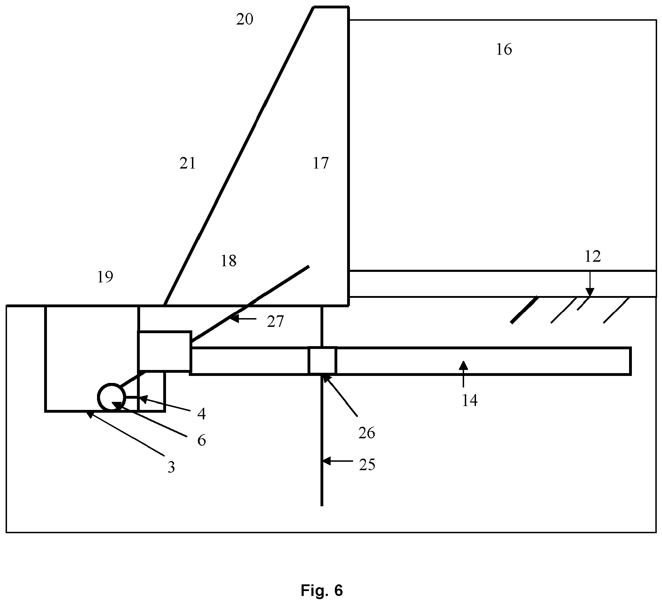

In Fig. 5 ist eine Talsperrenvariante des PSW mit einer zentralen Kaverne innerhalb bzw. unterhalb der Mauer in einem Längsschnitt dargestellt. In Fig. 6 ist eine Konstruktion mit einer luftseitigen Kaverne gezeigt.

Als eine Bedingung für diese möglicherweise günstigste Bauweise des PSW ist eine ausreichend dimensionierte Bestandssituation zu nennen, welche einen zusätzlichen Raum für weitere Einbauten bieten kann. Neben dem Platzbedarf für die notwendige Bautechnologie zum Auffahren eines Speicherstollens 14 sollte auch ausreichend Platz oder mindestens ein Potential für eine Erweiterung der Räumlichkeiten innerhalb der Talsperre 17 vorhanden sein. Die ggf. erforderlichen Regel- und Steuerorgane werden in den meisten Fällen vorhanden oder entsprechend erweiterbar sein. Wichtig ist auch eine ausreichende Einbindetiefe der Talsperre 17 in den Baugrund (Felshorizont). Gegebenenfalls kann es erforderlich sein, dass von der Schiebekammer 17 in einem ersten Schritt ein senkrechter Schacht in die Tiefe aufgefahren wird. Dabei sollten die ggf. vorhandenen Sicherheits- und Messeinrichtungen, wie z.B. Druckmesssonden und Dichtungsschleier 25, berücksichtigt werden. Sollte es beispielsweise erforderlich sein, Dichtungsschleier 25 zu durchstoßen (siehe z. B. eine Durchdringung 26 durch den aufgefahrenen Stollen 14 in Fig. 4), so sollten in diesen Bereichen umlaufende Verpressungen und Eindichtungen eingerichtet werden. In Fig. 6 ist darüber hinaus ein Grundablass-Anschluss 27 gezeigt.

Die beschriebenen Varianten bzw. deren einzelne Komponenten können in einem PSW auch kombiniert werden. Insbesondere kann eine aufgesetzte Variante (Tunnel) mit einer UntertageVariante (Stollen) in einer Anlage kombiniert werden.

Unabhängig davon, ob das erfindungsgemäße PSW im Meer oder in einer Talsperre oder einem sonstigen Gewässer eingesetzt werden soll bzw. wird, d.h. in allen Fällen weist es vorzugsweise mehrere oder, besonders bevorzugt, alle der folgenden Komponenten auf:
- einen künstlichen, wasserdichten, abschließbaren Hohlkörper als Speichermedium, z.B. mit einem Tunnel- und/oder Stollensystem, das entweder in einer natürlichen Umgebung eingebettet ist, die künstlich wasserdicht und abschließbar gemacht wurde, z.B. bergmännisch vorgetriebene Tunnel oder Stollen, ggf. auch unter Ausnutzung natürlich vorhandener Hohlräume, oder in Form eines künstlich gefertigten, ggf. modular aus Speicherabschnitten zusammengesetzten Hohlkörpers, z.B. in Form von Rohren, Röhren oder dergleichen. Aufgrund der Wasserdichtigkeit dieses Hohlkörpers kann er bei Bedarf vollständig mit Wasser befüllt werden;
- regelbare Absperrorgane gegen Meeresraum und gegen den künstlichen Hohlkörper;
- eine Be- und Entlüftungsleitung für den künstlichen Hohlkörper;
- ein Maschinenhaus oder Maschinenraum, z.B. in Form einer zentralen Kaverne, mit Anschluss an den künstlichen Hohlkörper, z.B. an einzelne Tunnel/Stollen, Rohre, Röhren oder dgl.;
- einen Maschinensatz, ggf. in der zentralen Kaverne, der eine Pumpe, eine Turbine (vorzugsweise beides zusammen in Form einer Pumpturbine), einen Generator und einen Transformator, vorzugsweise jeweils sämtliche genannten Komponenten je Tunnel bzw. Stollen, aufweist;
- einen Wetter- und Versorgungsschacht (Revisionsschacht), vorzugsweise mit Bedienplattform oberhalb des Meeresspiegels, z.B. in der Art einer Ölplattform mit einem senkrechten Schacht bis zur Kaverne am Meeresgrund;
- ein Aus- und Einlaufbauwerk, das insbesondere oberhalb der Tunnel- bzw. Stolleneinbindung an der Kaverne am Meeresgrund angeordnet ist.

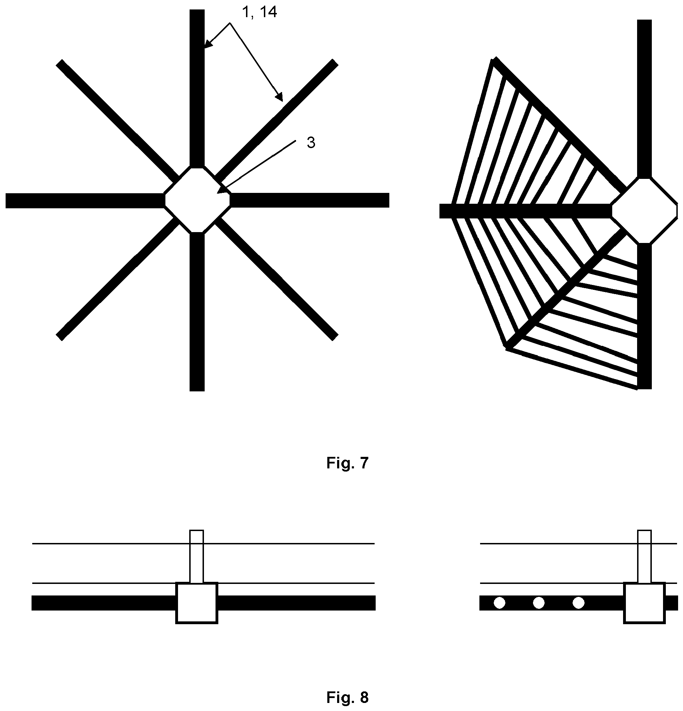

Insbesondere wenn das PSW an ein bestehendes Bauwerk oder eine (Fels-)Wand anschließt, wie es z.B. bei einer Anordnung in einer Talsperre möglich ist, kann es günstig sein, ohne eine zentrale Kaverne zu arbeiten und direkt ein Rohrsystem zu verwenden. Im Übrigen ist es günstig, mehrere Tunnel bzw. Stollen oder Rohre vorzusehen, welche mit einer Be- und Entlüftungsleitung ausgestattet sind. Diese können beispielsweise schlaufenförmig oder sternförmig um eine zentrale Kaverne angeordnet sein und in diese einbinden (siehe dazu Figuren 7 bis 10).

Vorzugsweise wird oberhalb der Stollen, Tunnel oder anderen Speicherabschnitte des Hohlkörpers je eine Öffnung einschließlich Ein- und Auslaufbauwerk mit Mitteln zum Zurückhalten von Verschmutzungen, wie z.B. einem Schlammfang, einer Spüleinrichtung und räumlichen Rechen, für das aus- bzw. einströmende Wasser angeordnet. Eine solche Öffnung kann prinzipiell auch seitlich oder unterhalb eines Stollens, Tunnels oder anderartigen Hohlkörperteils angeordnet sein. Der Ein- bzw. Auslauf kann vorzugsweise mit einem regelbaren Absperrorgan (z.B. mit Ringkolbenventilen), insbesondere innerhalb des Maschinenhauses bzw. der zentralen Kaverne (im Folgenden auch kurz: Kaverne), abgesichert sein. Der Einsatz eines gemeinsamen Bauwerks für Ein- und Auslauf des Wassers hat unter anderem den Vorteil, dass die Mittel zum Zurückhalten von Verschmutzungen nicht extra von den Verschmutzungen befreit und deshalb gewartet werden müssen: Schmutz, Algen, etc., welche beim Fluten des Hohlkörpers darin aufgefangen werden, werden beim Hinauspumpen des Wassers wieder weggespült.

Zur Vermeidung der Verklauselung bzw. Verlegung wird ein räumlicher Rechen mit schräg zulaufenden seitlichen Flächen und einer zwei- bis dreigeneigten vertikalen Fläche in der Art einer Haube angeordnet.

Ferner können in und/oder außerhalb der Kaverne Revisionsverschlüsse (z.B. Schieber) vorgesehen sein, um Revisionen bzw. Reparaturen der inneren Absperreinrichtungen zu ermöglichen. Innerhalb der Kaverne können beispielsweise jeweils ein Maschinensatz für einen oder zwei Tunnel bzw. Stollen oder sonstige Speicherabschnitte, die eine Pumpturbine, einen Generator und einen Transformator enthalten, sternförmig mit ausreichend Montagefreiraum installiert sein. Dabei sollte auf eine maximale Zugänglichkeit und den minimalen Platzbedarf pro Maschinensatz geachtet werden. Bei einem solchen Aufbau bleibt die Mittelposition für Revisionsfälle an jeweils einem Maschinensatz frei. Die Höhe der Kaverne kann sich nach der Bauhöhe der Maschinensätze zuzüglich etwaiger Montagehilfsmittel, wie z.B. Portalkräne mit Anschlagmitteln etc., richten.

Oberhalb des Maschinenhauses bzw. der Kaverne befindet sich ein Wetter- und Versorgungsschacht (Revisionsschacht, kurz: Schacht). Dieser verbindet die Kaverne mit der Meeres- oder Seeoberfläche. Innerhalb dieses Schachtes können die Be- und Entlüftungsleitungen, ein Fahrstuhl bzw. Personenfahrkorb sowie ein Seil einschließlich der Anschlagmittel für Montagen an den Maschinensätzen hochgeführt werden. Der Revisionsschacht sorgt für einen dauerhaften Zugang zur Maschinentechnik, ohne dass der Hohlkörper oder seine einzelnen Teile/Abschnitte gehoben werden müssen. Zur Revision von unter Wasser und am oder im Boden des Gewässers angeordneten Maschinen, Geräten sowie diversen Bauelementen des PSW (insbesondere auch vom Hohlkörper) können Techniker durch den Revisionsschacht trockenen Fußes ins Maschinenhaus gelangen und Werkzeuge und Ersatzteile befördert werden, z.B. mittels einer im Schacht angeordneten Hebevorrichtung. Insbesondere sind daher grundsätzlich Kontrolluntersuchungen und Reparaturen einzelner Elemente zur Laufzeit des PSW, d.h. ohne Unterbrechung, jederzeit möglich. Das Maschinenhaus oder mehrere Maschinenhäuser (z.B. bei Anlagen mit mehreren Tunneln/Stollen etc.) kann/können im unteren Teil des Revisionsschachts integriert sein oder daran angeschlossen sein und ein eigenes Gehäuse haben. Bei der letzteren Variante kann anstelle eines trockenen Schachtes auch ein Senkkasten zur Beförderung von Menschen und Geräten zwischen der Gewässeroberfläche und dem begehbaren Maschinenhaus verwendet werden.

Vorzugsweise hat der ggf. vorhandene Schacht oberhalb der Meeresoberfläche eine umlaufende Montageplattform. Diese ist vorzugsweise oberhalb des maximalen Wellenschlages angeordnet. Sie kann beispielsweise einen Hubschrauberlandeplatz, eine Montagehalle einschließlich eines Portalkrans zum Herausheben der Maschinensätze, einen Schiffsanleger einschließlich notwendiger Schifffahrtszeichen sowie ein Betriebsgebäude mit steuertechnischen und telekommunikativen Einrichtungen aufnehmen.

Nachfolgend werden Beispiele für einzelne vorstehend erwähnte Komponenten des erfindungsgemäßen PSW ggf. anhand von Zeichnungen beschrieben; insbesondere wird eine vorteilhafte Gestaltung der eingangs erwähnten einzelnen Baumodule angegeben.

### 2. Beispiele für einzelne Komponenten des PSW

### 2.1 Maschinenhaus mit Pumpturbine - Modul 1

Bei einer beispielhaften Ausgestaltung des PSW ist ein Maschinenhaus (z.B. eine zentrale Kaverne, vgl. die Figuren) als zentrale Einheit des Gesamtsystems vorgesehen. Es nimmt den Maschinensatz, der z.B. eine Pumpturbine oder, zweigeteilt, eine Pumpe und eine Turbine, sowie einen zugehörigen Generator ggf. einschließlich Equipment für die Pumpfunktion und Turbinenfunktion aufweist. Darüber hinaus können darin Verschlussorgane wie ein Kugelschieber zum Ein- und Auslaufbauwerk (Modul 2) sowie ein Schütz bzw. Schieber zur Toskammer (Modul 4) und Speichermedium (Modulgruppe 5) untergebracht sein. Ein nützliches Ausrüstungsteil kann auch ein Portalkran sein, z.B. zu einer Auswechslung des Generators, der Pumpturbine oder der genannten Verschlussorgane und deren Transport in den Wetter- und Versorgungsschacht. Bei der Konzipierung der Anlage kann es von Vorteil sein, dass diese Komponenten neben einer ergonomisch günstigen Anordnung auch weitgehend unabhängig zu den anderen Maschinenhäusern ausgebildet sind, dies kann z.B. bei einem Havariefall bzw. bei etwaigen Reparaturen an der Anlage einen ungestörten Betrieb benachbarter Anlagen gewährleisten.

### Beispiel für eine aufgesetzte Konstruktionsvariante:

In diesem Beispiel ist das Modul 1, das als Maschinenhaus ausgestaltet ist, vorzugsweise kraftschlüssig und druckwasserdicht, beispielsweise über dauerelastische Dichtungsbänder und Spannglieder, mit einem Modul 2, hier einem Ein- und Auslaufbauwerk, einem Modul 3, hier einem Wetter- und Versorgungsschacht, und einem Modul 4, hier einer Toskammer, verbunden. Wichtig für die Funktion kann eine hydraulisch günstige Ausbildung zum Modul 2, dem Ein- und Auslaufbauwerk, und zum Modul 4, der Toskammer, sein. Beide Öffnungen sind dabei vorzugsweise durch Verschlussorgane gesichert, die den Speicherzustand und damit die Funktion der Anlage absichern und auch eine Revision und Auswechslung von Komponenten ermöglichen. Um die Verschlussorgane selbst auswechseln zu können, können Revisionsverschlüsse außerhalb von Modul 1 angeordnet sein. Hierfür können beim Modul 2 gegebenenfalls Dammtafeln verwendet werden, die mittels Tauchtechnik von außen eingehoben werden können.

Aus technologischer Sicht kann das beschriebene Maschinenhaus am günstigsten gemeinsam mit den Modulen 2 und 3 eingebaut werden, denn es wird in diesem Beispiel auf ein ähnliches Niveau abgesenkt. Die Module 1 bis 3 können auf den Meeresgrund, z.B. auf ein möglichst tief ausgehobenes Planum, abgesenkt, verschraubt bzw. kraftschlüssig und druckwasserdicht miteinander verspannt und abschließend durch entsprechende Saug- und Spültechnik weiter in den Bodenkörper des Meeresbodens abgeteuft werden. Dabei kann es ggf. möglich und günstig sein, groß dimensionierte Teile des Maschinenhauses vor Ort zu montieren. Nach dem Erreichen einer geeigneten Tiefe und der Montage der restlichen Module 4 und 5 sowie dem Lenzvorgang mit erfolgreicher Dichtigkeitsprobe können innere Betonagen erfolgen.

### Beispiel für eine Untertagevariante:

Im Falle einer Untertageausführung kann die oben beispielhaft beschriebene Modul-Struktur bergmännisch als Kaverne aufgefahren werden. Die Module 2, 3, 4 und 5 schließen in diesem Fall vorzugsweise als Stollen und Schächte an. Die Eindichtung kann z.B. mit Hilfe rückverankerter Spritzbetonschalen erfolgen.

Eine vorteilhafte Ausrüstung des Maschinenhauses weist mehrere, vorzugsweise alle, der folgenden Komponenten auf:
- Maschinensatz (siehe nachfolgenden Abschnitt)
- Elektrotechnische Anlage und Prozessleittechnik, Kommunikationstechnik, Sicherheitstechnik (siehe nachfolgender Abschnitt)
- Servomotoren, Erregungseinrichtungen zum Anfahren
- Regler
- Absperrorgane: Kugelschieber / Drosselklappe
- Entwässerungsanlage
- Druckluftanlage
- Kühlwasserversorgung
- Krane
- Personen- und Lastenaufzug

### 2.1.1 Maschinensatz bzw. -technik

Für den Betrieb von herkömmlichen Pumpspeicherwerken mit Fallhöhen von 60 m bis über 800 m haben sich radiale Turbinen bzw. radiale einstufige Pumpen nach der Bauart Francis durchgesetzt. Mit dieser Bauart ist es möglich, Pumpe und Turbine in einer Maschine ("Pumpturbine") zu vereinigen, welche je nach Drehrichtung als Pumpe oder als Turbine wirkt. Die einzelnen Maschinen erreichen dabei Leistungen von ca. 50 bis über 500 MW.

Eine andere, insbesondere früher gebräuchliche Lösung ist eine Anordnung von Turbine, Motor/Generator und Pumpe auf einer Welle (sog. ternäre Anordnung oder Drei-Maschinen-Lösung). Diese ternäre Anordnung stellt nach wie vor eine Option bei großen Fallhöhen (über 500 m) dar, da für die Turbine eine andere Bauart gewählt werden kann (Pelton-Turbine) als für die Pumpe. Aber auch unabhängig von der Fallhöhe bietet die ternäre Anordnung folgende Vorteile:
- Auslegung von Pumpen und Turbinen unabhängig voneinander, was höhere Wirkungsgrade ermöglicht;
- effektiver Phasenschieberbetrieb (Entkopplung von Pumpe und Turbine führt zu niedrigeren Reibungsverlusten);
- sehr kurze Startzeiten (Pumpe und Turbine können mit Wasser gefüllt gestartet werden);
- verkürzte Betriebswechselzeiten, da Pumpe und Turbine dieselbe Drehrichtung aufweisen;
- ein hydraulischer Kurzschluss kann mit einem Maschinensatz gefahren werden, was eine Lastregelung auch im Pumpbetrieb ermöglicht.

Diesen Vorteilen, die gerade bei zunehmender Bedeutung der Bereitstellung von Regelenergie zur Geltung kommen, stehen allerdings auch einige erhebliche Nachteile im Vergleich zu reversiblen Pumpturbinen gegenüber:
- deutlich höhere Aufwendungen und Kosten, denn es sind in der Regel
   - zwei hydraulische Maschinen;
   - zusätzliche Wasserwege mit doppelten Absperrorganen;
   - erhöhte bauliche Aufwendungen, und zwar nicht nur wegen der größeren Maschinen und der längeren Wasserwege, sondern auch wegen einer höheren Schwingungsbelastung, erforderlich;
- höhere Strömungsverluste durch die zusätzlichen Wasserwege;
- höherer Wartungsaufwand, längere Revisionszeiten.

Die Mehrkosten für ternäre Maschinensätze im Vergleich zu reversiblen Pumpturbinen gleicher Leistung können bis zu 80 % betragen.

Die Fortschritte in der Entwicklung und Konstruktion von reversiblen Pumpturbinen haben dazu geführt, dass heute bei herkömmlichen Pumpspeicherwerken mit Pumpturbinen Fallhöhen von bis über 750 m beherrscht werden können.

Eine deutliche Verbesserung der Möglichkeiten für die Bereitstellung von Regelenergie mit reversiblen Pumpturbinen wird durch die Entwicklung drehzahlvariabler Maschinen erreicht. Elektrisch wird dies durch die Entwicklung von Asynchronmotoren gelöst. Damit ist es möglich, mit reversiblen Pumpturbinen auch im Pumpbetrieb Regelenergie bereitzustellen. Aber auch im Turbinenbetrieb können höhere Wirkungsgrade und ein besseres Betriebsverhalten, insbesondere bei Teillast, erreicht werden. Zusammenfassend weisen drehzahlvariable Maschinen folgende Vorteile auf:
- Regulierung der Leistungsaufnahme im Pumpbetrieb;
- Betrieb bei extremem Fallhöhenverhältnis Hmax/Hmin > 1,4;
- Frequenz- und Leistungsregulierung im Pumpbetrieb;
- verbesserte Turbinenwirkungsgrade, insbesondere bei Teillast;
- größerer Leistungsregelbereich auch im Turbinenbetrieb;
- verbessertes Kavitations- und Druckstoßverhalten im Turbinenbetrieb;

Dem stehen im Vergleich zur drehzahlfixierten Pumpturbine (Synchronmaschine) höhere Kosten um ca. 40% sowie höhere Verluste der elektrischen Maschinen inkl. Frequenzumrichter gegenüber. Die höheren Verluste der elektrischen Maschinen werden aber durch die verbesserten Wirkungsgrade der hydraulischen Maschinen mehr als ausgeglichen.

Für den Maschinensatz eines erfindungsgemäßen PSW kann daher die Wahl einer Pumpturbine, insbesondere einer drehzahlvariablen Pumpturbine, von Vorteil sein. Dennoch können bei spezifischen Ausgestaltungen des PSW aus den vorstehenden Gründen generell auch voneinander getrennte Pumpen und Turbinen eingesetzt werden.

Insbesondere bietet sich aufgrund der schwankenden Stromstärke aus Windkraftanlagen eine Kombination von Synchron- mit Asynchronmaschinen an. Hierzu können beispielsweise zwei Pumpturbinen eingesetzt werden, eine von denen drehzahlfixiert und die andere drehzahlvariabel ist. Während die erstere effektiv die im Wesentlichen konstante Grundlast umsetzt, kann die drehzahlvariable Pumpturbine in diesem Fall die variierende zusätzliche Last (Spitzenlast) der Regelenergie aufnehmen. Die konkrete Anlagenkonzipierung, insbesondere betreffend die Anzahl, die Größe/Leistung sowie das Anzahl- und Größenverhältnis von verwendeten Synchron- und Asynchronmaschinen, gestaltet sich je nach vorhandenem Energiemix z.B. aus reiner Offshore-Windenergie oder eingemischter Onshore-Energie aus küstennahen konventionellen Kraftwerken.

2.1.2 Eine vorteilhafte elektrotechnische Ausrüstung weist mehrere, vorzugsweise alle der folgenden Komponenten auf:
- Maschinentransformator zum 110 kV - Stromnetz
- Umspanner mit:
   - Schaltfeld
   - Überspannungs-Ableiter
   - Leistungsschalter
   - Trennschalter
- Maschinenschaltanlage
- Erdungsanlage
- Eigenbedarfsanlage
- Schwarzstarteinrichtung
- Gleichstromanlagen
- Schaltwarte (autom. Schutz, Fernmelde- und Wirkanlagen)
- Druckluftanlagen
- Kabel
- Licht- und Kraftinstallation
- Prozessleitsystem (Überwachung und Bedienung der Anlagentechnik)

Zusätzlich zu den genannten für den Betrieb des PSW genutzten Anlagen können folgende Komponenten nützlich sein:
- infrastrukturelle Anlagen (Ausrüstung des ggf. vorhandenen Wetter- und Versorgungsschachts und der ggf. vorhandenen Plattform)
- Anbindung an das bestehende Stromnetz
- Kommunikationstechnik
- Sicherheitstechnik/Objektschutz

### 2.2 Ein- und Auslaufbauwerk mit Rechen - Modul 2

Das Modul 2 ist ein Ein- und Auslaufbauwerk, das hier z.B. mit Rechen ausgestaltet ist. Es kann einen einfachen aufgehenden Schacht mit Öffnung in Höhe des Verschlussorganes, welches z.B. an die Pumpturbine anschließt, und eine Rechenabdeckung zur Vermeidung des Ansaugens von Treibgut am Meeresgrund aufweisen. Der Schacht wird z.B. über entsprechende Verschraubungen mittels Spanngliedern am Modul 1, hier dem Maschinenhaus mit Pumpturbine, befestigt und hält dadurch die tiefgelegene Öffnung zum Maschinenhaus frei. So wird eine hydraulische Verbindung der tiefgelegenen Pumpturbine mit dem Wasserkörper hergestellt. Über der Sohle des Schachtes steht bis zum Meeres- bzw. Seespiegel die Wassersäule, welche den erfindungsgemäß nutzbaren hydrostatischen Druck quantifiziert. Das Modul Ein- und Auslaufbauwerk mit Rechen kann vorzugsweise mindestens 5 bis 10 Meter über dem anstehenden Meeresboden herausragen, wodurch vermieden werden kann, dass der Schacht durch eine etwaige Dünung am Meeresboden oder den Wellengang zugeschüttet wird bzw. beim Ansaugprozess große Sandmengen angesogen werden. Gegebenenfalls ist es nützlich, eine umlaufende mehrlagige Steinschüttung bzw. Bigbacks anzuordnen, die darunter lagernde feinere Bodenschichten hindern, aufgesaugt zu werden.

### Beispiel für eine Untertagevariante:

Im Falle einer Untertageausbildung der Anlage können entsprechend größere Schächte bis zur Oberkante des Meeresbodens geführt werden. Auch diese ragen vorzugsweise mindestens 5 bis 10 Meter über den Boden. Ähnlich wie beim unten genauer beschriebenen Wetter- und Versorgungsschacht können diese durch Spül- und Saugtechnik über mehrere Schachtringe bis zum tragfähigen Fels abgesenkt und von dort bis zur Kaverne bergmännisch aufgefahren werden. Gegebenenfalls kann es günstig sein, die Schächte von unten aus dem Fels heraus zu erschließen und die eingespülten Schächte für den Bauzustand vorerst druckwasserdicht von oben her zu verschließen.

### 2.3 Wetter- und Versorgungsschacht (Revisionsschacht) - Modul 3

Das Modul 3, das in diesem Beispiel als ein Wetter- und Versorgungsschacht ausgebildet ist, stellt ein Bindeglied zwischen dem Meeresspiegel und der ggf. am Meeresboden befindlichen zentralen Kaverne bzw. im Allgemeinen einem Maschinenhaus oder aber einem Teil des künstlichen Hohlkörpers dar. Gemäß seiner Funktion kann dieser Schacht zum einen der Versorgung der gesamten Einbauten sowie der bauwerkseitigen Überwachung (Dichtigkeitskontrollen usw.) der Anlage dienen, zum anderen die Bewetterung der Anlage und damit z.B. die eigentliche Funktion der Anlage mittels der Be- und Entlüftungsleitung über das Entweichen bzw. Nachströmen der Luft in das in der Wassertiefe befindliche Speichersystem sichern.

Eine vorteilhafte Ausgestaltung des Moduls 3 weist insbesondere bei großen, im Meer angeordneten PSW mehrere oder vorzugsweise alle der folgenden Komponenten auf:
1.)Aufgehender Schacht z.B. aus Stahlbeton, Stahl oder ähnlichem Material vom Bodenniveau der Module 1 und 2 bis vorzugsweise mindestens 10 m über dem Meeresspiegel, je nach den Erforderlichkeiten der anstehenden Seegangsparametern, errichtet ggf. aus verschiedenen Schachtstücken, Rohrsegmenten oder ähnlichen Strukturen, welche druckwasserdicht und kraftschlüssig miteinander verbunden sind.
2.)Be- und Entlüftungsleitung, welche innen und/oder außen am Wetter- und Versorgungsschacht angebracht sein können.
3.) Hochseetaugliche Montageplattform, vorzugsweise mit ausreichendem Hochwasser- und Sturmflutschutz oberhalb des Meeresspiegels ausgerüstet, ggf. mit einem Schiffsanleger, z.B. selbsttragend oder-schwimmend in der Art einer Ölplattform oder als eine kraftschlüssig mit dem Wetter- und Versorgungsschacht verbundene Betonplattform.
4.)Montagehalle über der Öffnung des Wetter- und Versorgungsschachtes ggf. mit einem Portalkran, ggf. bis über die Plattform hinaus, Schwerlastaufzug bis zur Sohle des Wetter- und Versorgungsschachtes zum Herausheben zu reparierender Maschinenteile, ggf. Personenaufzug, Kabel- und Versorgungsschächte sowie Nachrichten-, Funk- und Leitzentrale, Mannschaftsräume, Sanitäre Einrichtungen usw..
5.) Hubschrauberlandeplatz ggf. auf der Montagehalle zur schnellen Versorgung mit dem Festland.

Die Be- und Entlüftungsleitung(en) kann/können jedoch auch anders als am/im Modul 3 angeordnet sein, z.B. von einem distalen Tunnel-/Stollen- oder Rohrende unmittelbar nach oben an die Gewässeroberfläche führen (siehe die Beschreibung zu Modul 5).

Über die Montageplattform wird die gesamte Anlage angedient und versorgt. Eine (Elt)Überleitungsanlage einschl. Transformatoren, Umspannwerk usw. kann innerhalb des Modules 1 untergebracht sein. In diesem Fall kann die Steuerung und Überwachung von der Montageplattform aus erfolgen.

Nachfolgend werden noch einzelne genauere Erklärungen zu den möglichen Einzelkomponenten des Moduls 3, des Revisionsschachtes, angegeben:
Beispiel eines aufgehenden Schachts:
Der aufgehende Schacht kann bei der aufgesetzten Variante unter anderem aus Stahlbetonsegmenten ähnlich der Tunnelbauweise des Speichermediums (s.u.) hergestellt werden, welche aber im Gegensatz dazu aufeinander aufgesetzt werden. Dabei kann eine Art Pfalz vorgesehen sein, der sowohl als Zentrierhilfe als auch als Aufnahme der Dichtelemente, z.B. einer Art Lippendichtung, genutzt werden kann. Ein großer Vorteil dieser Lösung ist das hohe Eigengewicht, welches die Auftriebssicherheit der gesamten Konstruktion, insbesondere der zentralen Kaverne, verbessert. Es sind aber auch Stahl- und Kunststoffkonstruktionen bzw. andere selbstragende und kombinierte Konstruktionen möglich. Diese können unter Umständen leichter zu verarbeiten sein, unterliegen jedoch in der Regel einem deutlich höheren Auftrieb, welchem wiederum z.B. durch Rückverankerung und Abspannsysteme abgeholfen werden kann.

Für die Untertagevariante kann, zumindest im Bereich der Durchdringung des Meeresbodens, eine massive Konstruktion gewählt werden, die neben dem anstehenden massiven Wasserdruck auch einem zusätzlichen Erddruck des anstehenden Sandes und Schlicks widerstehen kann. Wichtig für den Erfolg der Konstruktion kann hier unter anderem die Einbindung in den Felshorizont sein. An dieser Schnittstelle kann es nützlich sein, dass ausreichend Fels ausgebrochen ist (z.B. mit hydrodynamischen Schneideverfahren) und ein waagerechtes Planum hergestellt wird, auf dem ggf. der unterste Schachtring wasserdicht aussetzen kann. Eine Anschlussfuge kann dann umlaufend wasserdicht verpresst (Felsersatz) werden. Von diesem Niveau aus kann dann im ggf. gelenzten Schacht mittels Bohrtechnik ein bergmännisch aufgefahrener Schacht bis in wasserdichte Felsregionen hergestellt werden. Von diesem Horizont aus kann dann die Maschinenkaverne aufgefahren werden.

### Be- und Entlüftungsleitung

Die Be- und Entlüftungsleitung, wie eingangs bereits erwähnt, nimmt in der Funktion der Anlage eine zentrale Rolle ein. Sie sorgt dafür, dass die angesaugte Luft beim Entleeren des Speichermediums (beim Verdrängen des Wassers daraus, Energiespeicherzustand) einströmen kann und die verdrängte Luft beim Fluten des Speichermediums (Energieentladung) entweichen kann. Für eine sichere Funktion der Be- und Entlüftungsleitung kann es nützlich sein, dass die Ein- und Ausströmöffnung am Hochpunkt des jeweiligen Speicherorgans liegt, sodass dadurch keine Luftblasen im Speichermedium verbleiben. Folgende Ausführungsvarianten sind unter anderem möglich:
- Be- und Entlüftungsleitung innerhalb des Speichermediums mit Hochpunkt am (z.B. distalen) Rohr-, Tunnel- oder Stollenende;
- Be- und Entlüftungsleitung außerhalb des Speichermediums mit Tief-, vorzugsweise Hochpunkt am Rohr-, Tunnel- oder einem sonstigen Speichermedium.

Bei der letzteren Variante kann z.B. ein stabiler Kunststoffschlauch ein längliches Speichermedium an seinem Hochpunkt direkt durch die Wassermasse mit der Oberfläche des Gewässers verbinden. Die Rohrleitungen der Be- und Entlüftungsleitungen können insbesondere bei der ersteren Variante entlang der Achse der Speichermedien bis zum Wetter- und Versorgungsschacht geführt werden (siehe auch die Beschreibung zu Modul 5 und die Figuren). Am Wetter- und Versorgungsschacht selbst können diese nach oben geführt werden und oberhalb des Wasserspiegels ausblasen. Dabei ist es grundsätzlich unerheblich, ob die Leitungen innerhalb oder außerhalb des Wetter- und Versorgungsschachtes verlaufen. Die Innenvariante hat den Vorteil, dass ein Wassereinbruch weitgehend vermieden werden kann bzw. nicht mit einem hohen anstehenden hydrostatischen Druck erfolgt und die Leitung zudem einfacher gewartet und beobachtet werden kann. Vorzugsweise ist die Leitung mit einem Leckmeldesystem ausgerüstet.

### 2.4 Toskammer - Modul 4

Das Modul 4 ist in diesem Beispiel als ein Bindeglied zwischen Modul 1, dem Maschinenhaus, und der Modulgruppe 5, dem Speicherkörper, wie z. B. den Speicherstollen bzw. -Tunneln , ausgestaltet und sorgt für eine ausreichend gute Umwandelung einer turbulenten Strömung in eine weitgehend laminare Strömung des Wassers sowohl beim Laden (Verdrängen oder Absaugen des Wassers) als auch beim Entladen (Fluten mit Wasser) des PSW. Dabei kann es nützlich sein, dass immer ein gewisser Wasserspiegel in der Toskammer verbleibt, durch den ein ggf. höherer Ansaugdruck für die Pumpen bzw. ein ausreichendes Wasserpolster erreicht wird. Dabei ist es auch möglich, über eine einzelne Toskammer mehrere Stollen/Tunnel/Rohre anzuschließen. Für diesen Fall kann es vorteilhaft sein, die Toskammer mit entsprechenden Verschlussorganen (z.B. mit Schützen bzw. Schiebern) zu versehen, um die Stollen, Tunnel bzw. Rohre einzeln einer Revision zuführen zu können.

### 2.5 Künstlicher, wasserdichter, abschließbarer Hohlkörper - Modulgruppe 5

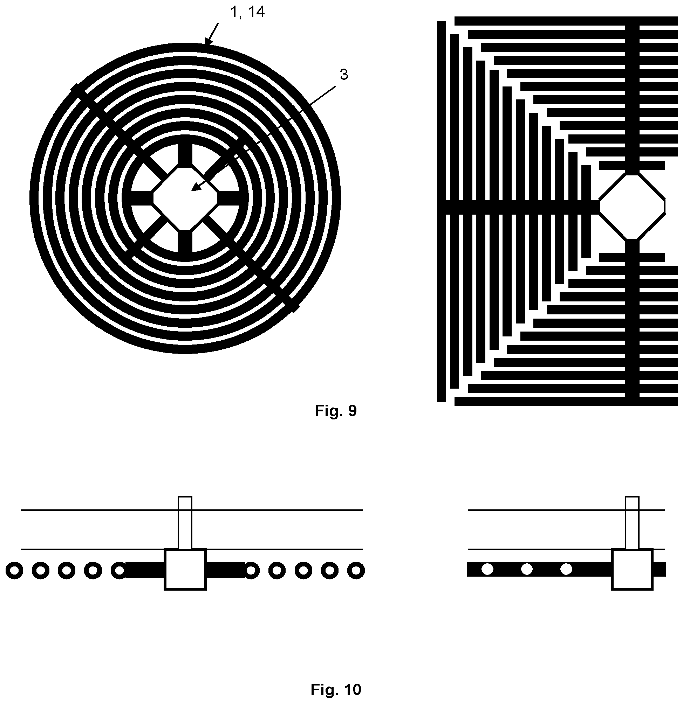

Eine einfache und zugleich im Hinblick auf die Realisierung und Funktion äußerst zuverlässige Variante, einen künstlichen wasserdichten, abschließbaren Hohlkörper mit einem möglichst großen Wasserspeichervolumen im Sinne der Erfindung im Boden eines Gewässers zu errichten, ist die Ausbildung eines möglichst weitverzweigten Tunnel-, Stollen- bzw. Rohrsystems, welches leergepumpt und wieder gefüllt werden kann. Dabei können viele verschiedene Formen und Materialien eingesetzt werden. Bei spezifischen Ausgestaltungen bestimmter Teile eines solchen Stollen- bzw. Tunnel oder Rohrsystems können unter anderem auch folgende Elemente zur Anwendung kommen:
- Bauteile aus dem Tunnelbau, wie z.B. Stahlbetonrechteckprofile, Halbschalen und Stahlbetonröhren, welche zu dem oben genannten Zweck beispielsweise an Land, z.B. in einem Trockendock, produziert, als abgeschottete Hohlkörper vor Ort eingeschwommen und auf ein am Meeresgrund vorgefertigtes Planum abgesenkt werden können;
- standardisierte Beton- oder Stahlbetonrohrleitungen mit großen Durchmessern. Diese können beispielsweise in einer hinsichtlich des Speichervolumens und des konstruktiven Aufwands möglichst effektiven Anordnung, z.B. sternförmig (vgl. Figuren 7, 8 links) oder mit spinnennetzartigen Zwischenstreben (vgl. Figuren 7, 8 rechts), zwischen (dickeren) Röhren in einer Kreis- bzw. Ringform (vgl. Figuren 9, 10 links) oder schlaufenartig (vgl. Figuren 9, 10 rechts) verlegt werden;
- Ausgekleidete/abgedichtete natürliche und/oder künstlich hergestellte (z.B. bergmännisch vorgetriebene) Hohlräume im Erdboden;
- eine Kombination aus zwei oder mehr der obigen Elemente.

Neben der Verwendung von Beton- und Stahlbetonbauteilen ist grundsätzlich auch die Verwendung von Stahl und Kunststoff für bestimmte Teile eines erfindungsgemäßen Aufbaus möglich. Hierbei ist jedoch zu berücksichtigen, dass bei Stahlbauelementen ein Korrosionsrisiko aufgrund des Salzwassers bestehen kann und Kunststoffbauteile aufgrund des geringen Eigengewichtes relativ großen Auftriebskräften ausgesetzt sein können. In diesem Fall kann eine geeignete Überdeckung als Beschwerung oder Verankerung im/am Boden vorgesehen sein.

Einige vorteilhafte Möglichkeiten für die Anordnung eines Rohr-, Tunnel- bzw. Stollensystems im erfindungsgemäßen PSW sind nachfolgend dargestellt.

Bei dem in Figuren 7 und 8 gezeigten sternförmigen bzw. spinnennetzartigen Rohr-, Stollen- und Tunnelsystem kann im Sinne der Erfindung ein großräumiger Tunnel- bzw. Stollenquerschnitt von z.B. 10 x 20 m, also ca. 200 m², gewählt werden. Kleinere und größere Querschnitte können jedoch in spezifischen Ausgestaltungen ebenfalls von Vorteil sein sind. Die Zwischenstreben, sofern gewünscht, können z.B. zumindest teilweise unter Verwendung von Beton- bzw. Stahlbetonrohrleitungen, aber auch von Kunststoffröhren mit einer ausreichenden Überdeckung/Bodenbefestigung hergestellt werden. In Fig. 7 sind die Grundrisse dieser beiden Ausführungsformen des Hohlkörpers, in Fig. 8 die entsprechenden Querschnitte dargestellt.

Bei der in Figuren 9 und 10 gezeigten kreis- bzw. ringartigen Anordnung, aber auch bei der darin ebenfalls gezeigten schlaufenartigen Anordnung kann man z.B. von großräumigeren Sammelstollen bzw. -Tunneln oder Rohren ausgehen, in welche Beton- oder Kunststoffrohre mit einem möglichst großen Durchmesser wie in den Figuren gezeigt einbinden können. Dabei kann davon ausgegangen werden, dass die Sammelstollen bzw. -Tunnel oder Röhren einen ähnlichen Querschnitt wie bei der obigen ersten Ausführungsform mit der sternförmigen Anordnung haben. Zur Reduktion des notwendigen Materials ist es insbesondere bei der Ringlösung möglich, dass nur die beiden ersten Ringe in kurze Einlaufstollen münden. Die Verbindung der restlichen Ringe kann ebenfalls über einfache Beton- bzw. Stahlbetonrohre erfolgen. In Fig. 9 sind die Grundrisse dieser beiden Ausführungsformen des Hohlkörpers, in Fig. 10 die entsprechenden Querschnitte dargestellt.

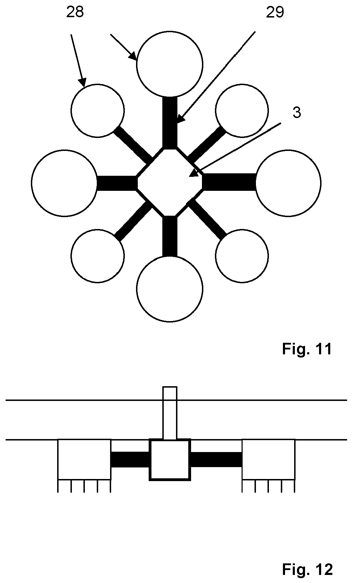

Eine weitere prinzipiell mögliche Lösung zur Schaffung eines möglichst großen Speichervolumens beim Hohlkörper am Meeresgrund ist das Absenken großer, auftriebsgesicherter Behälter oder Kavernen, welche mit Rohrleitungen verbunden werden können. Diese Ausführungsform ist im Grundriss in Fig. 11, im Querschnitt in Fig. 12 gezeigt.

Ähnlich wie die unter anderem eingangs bei der ersten bevorzugten Ausführungsform beschriebene zentrale Maschinenkaverne 3, werden hier die Speicherkavernen bzw. -Behälter 28 z.B. aus verspannten Stahlbetonsegmenten mit gedichteten Fugen am Meeresgrund errichtet. Da die Speicherkavernen bzw. -Behälter keine eigenen Wetter- und Versorgungsschächte besitzen, fehlt ihnen unter Umständen jedoch die nötige Auflast. Daher können diese gegen den Auftrieb z.B. über GEWI-Anker bzw. Auflastkörper gesichert werden. Ein Vorteil dieser Ausführungsform gegenüber dem Tunnel- bzw. Stollensystem ist ein gutes Verhältnis zwischen dem Materialaufwand und dem erreichbaren Nutzvolumen. Um einen Vergleich zum Tunnel- und Stollensystem herzustellen, wurde im nachfolgenden Beispiel ein vergleichbares Nutzvolumen wie beim einfachen sternförmigen System für ein Behälter- bzw. Kavernensystem kalkuliert. Ausgehend von einem Behälter- bzw. Kavernendurchmesser von ca. 40 bis 60 m und 20 bis 40 m Höhe ergibt sich ein Volumen von jeweils 25.000 bis 50.000 m³. Dennoch könnte aufgrund der im Vergleich aufwendigen Technologie nur ein unverhältnismäßig hoher Preis pro Speichervolumen erreicht werden. Darüber hinaus müssten für eine vergleichbare Speicherkapazität pro Anlage ca. 80 Speicherkavernen bzw. -Behälter gebaut werden. Diese könnten z.B. über ein entsprechendes Tunnelsystem 29, wie in Fig. 11 beispielhaft gezeigt, miteinander bzw. mit dem Maschinenraum 3 (hier in Form einer zentralen Kaverne) verbunden werden. Auch eine im Vergleich relativ aufwendige Be- und Entlüftung. z.B. über Schnorchel je Behälter/Kaverne, spricht nicht gerade für die Speicherkavernen- bzw. Behälterlösung.

Alle voranstehenden Varianten können waagerecht und/oder mit gleichbleibendem Durchmesser eingesetzt werden. Alternativ sind geneigte Hohlkörper oder deren Abschnitte möglich, die vorzugsweise in Richtung der Pumpe/Turbine abfallen und ihren höchsten am gegenüberliegenden (distalen) Ende haben. Entsprechend muss die Be- und Entlüftung ausreichend bis zur letztmöglichen "Luftblase" geführt werden. Die Steigung kann z.B. 10% oder weniger, in folgender Reihenfolge zunehmend bevorzugt: höchstens 6%, höchstens 3%, höchstens 1% betragen.

Nachfolgend wird auf den von den in Figuren 7 bis 12 gezeigten Beispielen für konkrete Ausführungen unabhängigen allgemeinen Aufbau der Modulgruppe 5 eingegangen.

Grundsätzlich kann man, wie bereits oben beschrieben, zwischen einer aufgesetzten Bauart (z.B. eine Tunnellösung) und der untertage Variante (z.B. eine Stollenlösung) unterscheiden.

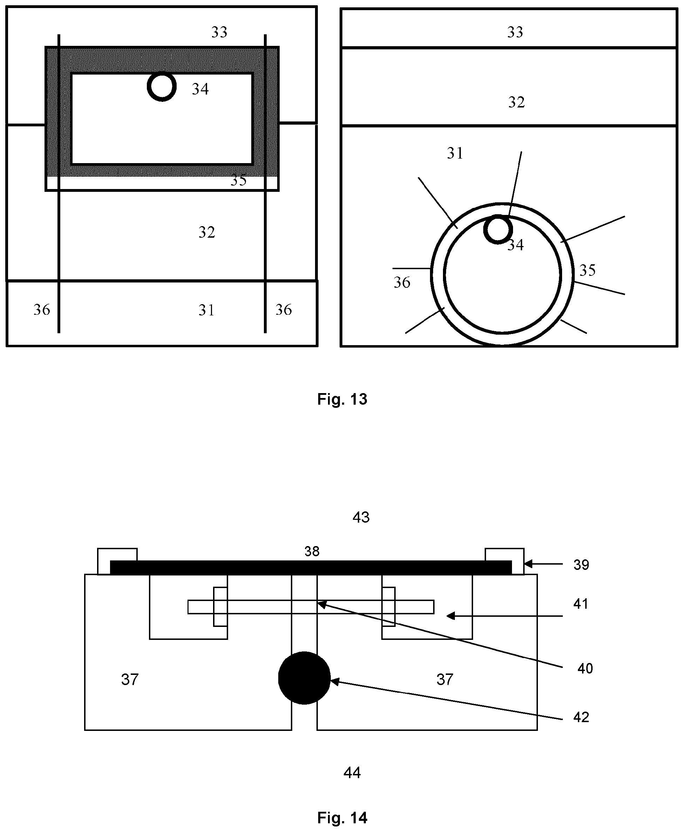

Fig. 13 zeigt links ein Beispiel für die aufgesetzte Bauweise des erfindungsgemäßen PSW im Querschnitt mit einem Tunnelsegment und rechts ein Beispiel für die untertage Bauweise mit einem Stollen. Dargestellt sind darüber hinaus ein Fels 31, Sand- und Schlickschichten 32, der Meereskörper 33, Be- und Entlüftungsleitungen 34, eine Beton- bzw. Stahlbetonhülle 35 des Tunnels bzw. Stollens oder Rohrs sowie eine Rückverankerung 36.

Eine vorteilhafte Ausgestaltung des erfindungsgemäßen Speicherkörper-Moduls 5 kann mehrere, vorzugsweise alle der folgenden Teile aufweisen:
- Beton- bzw. Stahlbetonhülle, welche den Speicherraum umgibt und gegen den außen anstehenden Wasserdruck abschirmt. Auch andere Materialien, wie z.B. Kunststoff, Stahl oder Legierungen, können eingesetzt werden;
- eine Be- und Entlüftungsleitung, ggf. eine solche Leitung je Hohlkörperabschnitt wie z.B. Tunnel oder Stollen, welche z.B. in die ggf. vorhandene zentrale Kaverne und den ggf. vorhandenen Bewetterungsschacht einbindet und so die beim Verdrängen des Wassers aus dem Speicherkörper angesogene Luft einströmen lässt bzw. die verdrängte Luft beim Fluten des Speicherkörpers ausbläst;
- Fugen und Stöße zwischen den ggf. vorhandenen Tunnel- oder Rohrsegmenten bzw. zwischen den Spritzbetonschalen z.B. in einem Stollen einschließlich etwaiger Dichtungssysteme;
- Rückverankerungen gegen den Auftrieb (z.B. beim Tunnelsystem) und Wasserdruck (z.B. beim Stollensystem), ggf. einschließlich etwaiger Zugglieder und Verpresskörper;
- eine bauliche Anbindung an die ggf. vorhandene Toskammer bzw. ein ggf. vorhandenes Saugrohr der ggf. vorhandenen zentralen Kaverne, ggf. einschließlich etwaiges Verschlussorgan, z.B. mit Schieber oder Absperrklappe;
- eine druckdichte Revisionsöffnung zur Begehung bzw. Befahrung durch entsprechende Bautechnologie;
- ein Leckwarnsystem, wie z.B. einen Lichtwellenleiter zur Ortung von Wassereinbrüchen in das Speichermedium.

### Be- und Entlüftungsleitung

Zur teilweisen bzw. vollständigen Entleerung bzw. Befüllung des Hohlkörpers mit Wasser, z.B beim Tunnel- und Stollensystems, ist, wie bereits zu Modul 3 beschrieben, eine ausreichende Be- und Entlüftung erforderlich. Be- und Entlüftungsleitungen sind dabei jeweils bis zum Ende des Tunnels bzw. Stollens zu führen, der auch einen entsprechenden Hochpunkt in der Konstruktion bilden kann (siehe oben). Am Einbindepunkt des Tunnels bzw. Stollens an die ggf. vorhandene zentrale Kaverne durchdringt die Be- und Entlüftungsleitung beispielsweise eine Schottwand zwischen Tunnel bzw. Stollen und Kaverne und wird ggf. im Wetter- und Versorgungsschacht bis über die Meeresoberfläche hochgeführt. Dort kann sie in eine ausreichende Höhe über dem Meeresspiegel entwässern. Dies kann von Vorteil sein, denn bei einer vollständigen Flutung der Tunnel bzw. Stollen kann ein Druckschlag aus dem vollen hydrostatischen Druck der Wassersäule über dem höchsten Belüftungspunkt im Maximalfall bis zum Meeresspiegel durchschlagen. Im Normalfall würde dies jedoch durch die Anlagensteuerung verhindert werden können. Der Belüftungsquerschnitt kann für jede konkrete Anlage je nach Tunnel- bzw. Stollen- oder Rohrvolumen und Füllgeschwindigkeit ermittelt werden. Da Luft aber ein zusammendrückbares Medium ist, ist dabei der Druckschlag überwiegend maßgebend.

### 3. Herstellung und Montage

Nachfolgend werden Beispiele für eine Herstellungs- und Montageabfolge zur Errichtung eines PSW nach der Erfindung sowie vorteilhafte Ausgestaltungen der zugehörigen Füge- und Abdichtungstechnologie zwischen dessen einzelnen Abschnitten bzw. Segmenten beschrieben.

Die Betontechnologie an sich und zugehörige technische Ausrüstung ist weitgehend bekannt und nicht anlagenspezifisch. Vielmehr kommen am Markt bereits verfügbare Komponenten zum Einsatz.

### 3.1 Beispiele für die Herstellungs- und Montagefolge

Wie bereits oben beschrieben, sind verschiedene Varianten für die grundsätzliche Konstruktion der erfindungsgemäßen Anlage möglich, mit jeweils verschiedenen Möglichkeiten der herstellungstechnischen Ausführung, wie z.B.:
A: Fertigteilkonstruktion in Modulbauweise für eine auf dem See- oder Meeresgrund aufgesetzte Konstruktion.
B: Untertagekonstruktion Unterhalb des See- oder Meeresgrundes mit ggf. bergmännisch aufgefahrener Kaverne und Stollen mit einem Fertigteil für einen Bewetterungs- und Versorgungsschacht.
C: Talsperrenanlage mit abschnittsweiser Untertagekonstruktion und/oder aufgesetzten Anlageteilen in Fertigteil- oder Ortbetonbauweise.

### Variante A: Fertigteilkonstruktion in Modulbauweise

Diese Bauweise kann z.B. verwendet werden, wenn am Meeresgrund, wo die Anlage errichtet werden soll, eine mächtige Sandlage größer als 15 bis 20 m vorherrscht. Solche Baugrundverhältnisse sind geeignet, große Fertigteilkomponenten oder-Module auf ein z.B. temporär hergestelltes Planum abzusenken und ggf. mit schiffsgebundener Saug- und Spültechnik in den Meeresgrund abzuteufen. Folgende technologische Schritte können hier einzeln, in Gruppen, vorzugsweise in der angegebenen Gesamtheit und Reihenfolge, durchgeführt werden:
1. Flächenaufmass des Meeresgrundes und flächige Baugrunderkundung ggf. im Bereich der zentralen Kaverne, der Tunnel bzw. künstlich aufgebrachter Hohlräume (Speicherkavernen);
2. Einrichten eines Trockendocks zur Herstellung der großformatigen Betonfertigteile in einer nahen Werft;
3. Baustelleneinrichtung ggf. für die Beton- und Stahlbetonarbeiten am Trockendock ggf. mit eigenem mobilen Betonwerk usw.;
4. ggf. Bereitstellung der geeigneten schiffsgebundenen Saug-, Spül- und Schwimmtechnik einschl. Pontons für eine Offshore-Baustelleneinrichtung;
5. ggf. Herstellen der zentralen Kaverne, z.B. in Betonhalbschalen, innerhalb des Trockendocks. Nach ausreichender Erhärtung des Betons Anschlagen von Auftriebskörpern, Fluten des Trockendocks und Ausschwimmen von Abschnitten oder Segmenten vor Ort;
6. Herstellen eines Unterwasserplanums z.B. mit schiffsgebundener Saug- und Schwimmtechnik. Durchführung einer Toleranzkontrolle durch Taucher;
7. Einschwimmen der Betonhalbschalen und Absenken der Segmente mit Tauchern und Hochdruckwasserstrahltechnik. Zusammenfügen der Betonhalbschalen mittels Spannglieder am Meeresgrund;
8. Lieferung, Absenkung und Verbindung eines Einlaufschachtes. Nach der Fertigstellung der zentralen Kaverne kann die Absenkung der Konstruktion durch Spül- und Saugtechnik bis auf das erforderliche Maß unter OK Meeresboden folgen;
9. Herstellen der Bewetterungsschacht- und Tunnelsegmente im Trockendock. Ein- und Ausgang kann mit Stahltrennschotten versehen werden. Dock wird anschließend geflutet und Tunnelsegmente ausgeschwommen;
10. Aufsetzen des Bewetterungs- und Versorgungsschachtes bis über den Meeresspiegel und ggf. Herstellen einer Bedienplattform ggf. einschl. Schiffsanleger;
11. parallel zu Schritt 10 können ggf. Tunnel- und Rohrsegmente verlegt werden: Herstellen eines Planums, z.B. mittels der Saug- und Spültechnik, Einschwimmen und Absenken der Tunnel- bzw. Rohrsegmente und Zusammenfügen der Segmente am See-/ Meeresgrund, z.B. über Spannanker. Herstellung einer ausreichenden Überdeckung z.B. mittels schiffsgebundener Saug- und Spültechnik oder Auflastkörper (Bigbacks, Betonfertigteile oder Steinschüttungen);
12. ggf. nach der Fertigstellung der zentralen Kaverne mit Bewetterungsschacht und dem Anschluss der Tunnelsegmente einschl. Trennschott zur Kaverne kann diese gelenzt werden und eine Dichtigkeitskontrolle durchgeführt werden;
13. Einheben der technischen Ausrüstung ggf. einschl. der Verschlussorgane, Pumpen und Turbinen bzw. Pumpturbinen sowie der Steuerungstechnik (z.B. Elt/EMSR). Anschließend können Installationsarbeiten durchgeführt werden.
14. Herstellung einer Energieweiterleitung und Anschluss der Anlage an das Stromnetz.
15. Fertigstellung des Speichermediums, z.B. aus Tunnel- und Rohrleitungsnetzen. Anschließend Durchführung eines Funktionstestes (Lenzen) mit Dichtheitskontrolle.
16. Inbetriebnahme der Anlage.

### Variante B: Untertagekonstruktion Unterhalb des See-/Meeresgrundes

Diese Bauweise kann z.B. dann zur Anwendung kommen, wenn keine ausreichende Wassertiefe für einen aus wirtschaftlicher Sicht geeigneten hydrostatischen Druck vorhanden ist und zudem vorzugsweise in absehbarer Tiefe ein massiver Felshorizont ansteht. Wichtig kann unter Umständen auch sein, dass die den Felshorizont abdeckende Schicht z.B. mit Spül- und Saugtechnik beräumt werden kann. Tritt eine solche Situation ein, so kann z.B. nach dem Aufsetzen erster Segmente des Moduls 3, d.h. im obigen Beispiels des Wetter- und Versorgungsschachts, dieser mit einer entsprechenden Spezialtechnik, z.B. ähnlich der landseitiaen Brunnenbauweise in den anstehenden Sand- und Schlick abaetäuft werden. Dabei kommen beispielsweise ähnlich dem Senkkastenverfahren Spüllanzen und die entsprechende Saugtechnik zum Einsatz. Gesteinsbrocken und Findlinge auf dem Weg zum Felshorizont mit zerschnitten und entfernt oder an Ort und Stelle zertrümmert werden. Wenn der Felshorizont erreicht ist, kann ein waagerechtes Planum erstellt werden, auf dem der Wetter- und Versorgungsschacht kraftschlüssig und druckwasserdicht angeschlossen werden kann. Eine Fuge wird beispielsweise umlaufend mehrlagig verpresst und mit Felsankern gesichert. Vom nun anstehenden Felshorizont kann in einem ersten Schritt die wasserdurchlässige Schicht des Felses mit einem senkrechten Schacht durchstoßen und mit einer wasserdichten Spritzbetonschicht versiegelt und mir Felsankern gesichert werden. Ist eine wasserdichte Felsschicht erreicht, kann die Maschinenkaverne (Modul 1) bergmännisch aufgefahren werden. Von dieser können dann z.B. die Speicherstollen und die Ein- und Auslaufbauwerke errichtet werden. Folgender Bauablauf ist z.B. möglich, wobei einzelne Schritte allein, in Gruppen, vorzugsweise in der angegebenen Gesamtheit und Reihenfolge durchgeführt werden können:
1. bis 4. entsprechen den oben genannten Punkten für die aufgesetzte Variante;
5. im Gegensatz zu der aufgesetzten Variante werden zuerst ggf. die Segmente des Wetter- und Versorgungsschachtes hergestellt und vor Ort eingeschwommen;
6. Absenken der ersten Segmente auf ein am See-/Meeresgrund vorbereitetes Planum;
7. Abtäufen der Segmente z.B. durch Spül- und Saugtechnik sowie stückweises Aufsetzen der ggf. nachfolgenden Segmente des Wetter- und Versorgungsschachtes bis zum Erreichen des Felshorizontes. Dabei sollte unter Umständen ausreichend Auflast vorhanden sein und die Segmente sollten vorzugsweise weit genug aus dem Meeresgrund ragen;
8. Nach Erreichen des Felshorizontes kann das Planum an der Felsoberfläche ausgebrochen werden und waagerecht mit entsprechender Spezialtechnik, z.B. Hochdruckwasserstrahlen, hergestellt werden; es kann ggf. ein Segment des Wetter- und Versorgungsschachtes aufgesetzt und umlaufend als eine Art Dichtungsschleier verpresst werden, ein Schachtsegment kann in der Lage über Felsanker gesichert werden;
9. Restliche Schachtsegmente bis zur Meeresoberfläche können aufgesetzt werden, vorzugsweise bis der Wetter- und Versorgungsschacht ausreichend über den Meerwasserspiegel ragt;
10. Lenzen des Wetter- und Versorgungsschachtes zur Herstellung einer weitgehend trockenen Baugrube kann erfolgen; dabei kann anschließen oder gleichzeitig die Dichtigkeit der Anschlussfuge Fels - Wetterversorgungsschacht getestet werden;
11. Bergmännisches Auffahren des unteren Schachtstückes und umlaufendes Abdichten mit einer Betonschale und Rückverankerung im Fels;
12. Auffahren der Maschinenkaverne (Modul 1) ggf. einschl. Spritzbetonschale und ggf. paralleles Errichten der Montageplattform;
13. ggf. Auffahren der Toskammern (Modul 4), der Speicherstollen (Modulgruppe 5) und paralleles Auffahren der Ein- und Auslaufstollen (Modul 2) einschl. Spritzbetonschale;
14. Einbauen der Betoneinbauten;
15. ggf. Montage der Verschlussorgane, Maschinentechnik, elektrotechnischer Ausrüstung und sonstiger Ausrüstung;
16. Anschluss der Anlage an das Stromnetz, Funktionsproben und Inbetriebnahme.

Variante C: Talsperrenanlage mit abschnittsweiser Untertagekonstruktion und aufgesetzten Anlageteilen in Fertigteil- oder Ortbetonbauweise.

Bei der Variante C kann die Anlage dem Grunde nach in eine bestehende Talsperrenanlage integriert werden. Folgende zwei grundsätzliche Vorgehensweisen sind dabei unter anderem möglich:
- Ablassen der Talsperre und Herstellen der Anlage, insbesondere ggf. des Wetter- und Versorgungsschachtes, der Maschinenkaverne bzw. von Teilen des Speichermediums, in Ortbetonbauweise;
- Absenken von Teilen und ggf. Segmenten in die Talssperre und Montage mit einer Unterwasser- bzw. Untertagebauweise, insbesondere mit Speicherstollen und ggf. einer unterirdischen Kaverne, unter der Talsperre oder im Sperrenvorland.

Je nach der Bauweise genannter Art kann sich ein Schwerpunkt nach Variante A oder B ergeben. Aufgrund der betrieblichen und rechtlichen Situation im Bereich von Talsperren kann vor allem die Untertagevariante mit Anschluss an bestehende Betriebseinrichtungen eine bevorzugte Ausführungsvariante darstellen. Das Ablassen von Talsperren kann hingegen bei zumindest zeitweise funktionslosen Talsperren bzw. bei Talsperren mit untergeordneten Funktionen bevorzugt werden. Folgender Ablauf ist hier möglich, wobei einzelne Schritte separat, in Gruppen, vorzugsweise in der angegebenen Reihenfolge und Gesamtheit durchgeführt werden können:
1. Erkundung des Talsperrenuntergrundes, insbesondere des anstehenden Felshorizontes, z.B. mit geophysikalischen Verfahren;
2. ggf. Auffahren der Maschinenkaverne mit Zugangsstollen unter eine bestehende Talsperre, ggf. im Schatten des möglicherweise vorhandenen Dichtungsschleiers;
3. Auffahren des Anschlussschachtes senkrecht in die Talsperre und Vorbereitung zum Anschluss der Betriebseinrichtungen, wie z.B. Grundablassleitungen etc.;
4. Auffahren von z.B. sternförmigen Speicherstollen (allgemeiner: der Modulgruppe 5) ggf. einschl. Toskammer (Modul 4) unterhalb der Talsperre;
5. Betoneinbauten innerhalb der Maschinenkaverne;
6. Montage der Verschlussorgane, Maschinentechnik und elektrotechnischer Ausrüstung;
7. Anschluss der Maschinentechnik an die Betriebseinrichtungen der Talsperre;
8. Anschluss der Anlage an das bestehende Stromnetz, Funktionsprobe und Inbetriebnahme der Anlage.

### 3.2 Beispiele für die Füge- und Abdichtungstechnologie zwischen ggf. vorhandenen Abschnitten und Segmenten des Hohlkörpers

Entscheidend für die Funktionalität und die Nutzung des erfindungsgemäßen PSW ist die Dichtigkeit, z.B. im Bereich der Fugen zwischen den einzelnen künstlichen Speicherorganen bzw. Tunnelsegmenten, des künstlichen wasserdichten und abschließbaren Hohlkörpers. Da eine Fertigung der Bauteile vor Ort z.B. durch Ortbetonbauweise aufgrund der widrigen Bedingungen am Meeresgrund schwierig sein kann, können die Einzelkomponenten bzw. ggf. Segmente vorgefertigt und eingeschwommen werden. Für eine wasserdichte Verbindung, insbesondere gegen Wasser mit hohem hydrostatischem Druck, bei Beton- und Stahlbetonrohrleitungen können unter Umständen auch standardisierte Systeme genutzt werden. Für die Verbindung zwischen den Tunnelsegmenten anderer, spezifischer Geometrie können hingegen geeignete individuelle Systeme verwendet werden, die für das Gesamtsystem eine zentrale Rolle einnehmen. Folgende Kriterien können dabei je nach Konstruktion des PSW besonders wichtig sein:
- Kraftschlüssiger Verbund der Einzelkomponenten bzw. Segmente,
- Absicherung der Dichtigkeit mit der Möglichkeit einer Nachdichtung,
- hoher Widerstand gegen Salzwasserangriff (z.B. Korrosionsschutz)
- hoher Widerstand gegen drückendes Wasser (z.B. bei Wassersäulen von 50 bis 100 m).
- Einrichtung von Möglichkeiten zum Rückbau bzw. Reparatur.

Grundsätzlich ist eine Kombination von einem innenliegenden und einem außenliegenden Dichtungsband bevorzugt. Der Kraftübertrag kann über ein auswechselbares Spannglied in einem Hüllrohr erfolgen. Aus Korrosionsschutzgründen und zur Sicherung kann eine Montagenische mit einem mineralischen Vergussmörtel vergossen und ggf. mit einem außenliegenden Dichtungsband verschlossen werden. Bei einer eher konservativen Ausführung (nachfolgende Variante B) werden ergänzend zur Nachdichtung Verpressschläuche vorgesehen.

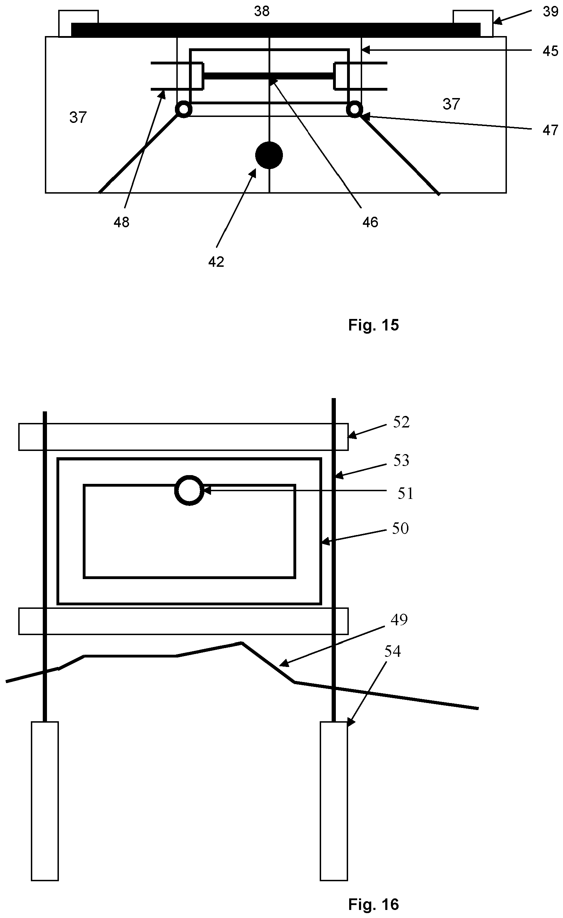

Folgende Beispiele sind dabei unter anderem möglich:
- Variante A: Verbindung der Segmente über Pressfugen mit dauerelastischen, salzwasserbeständigen Fugenbändern, z.B. aus Elastomer, welche mit Spanngliedern gegeneinander verspannt werden. Ein Ausführungsbeispiel für eine dauerelastische Fuge mit Spanngliedern ist in Fig. 14 dargestellt. Darin sind zwei Stahlbetonelemente 37 (diese sind der Innenseite des Segments, hier dem Tunnel 44, zugewandt), deren Schnittstelle abgedichtet ist, ein außenliegendes Fugenband 38 (dieses ist dem Gewässer, hier dem Meer 43, zugewandt), zugehörige Klemmleisten 39, ein Spannglied 40, Spannnischen mit Füllmörtel 41 sowie ein bezüglich einer Innenseite des (Tunnel/Stollen/Rohr-)Segments innenliegendes Fugenband 42 gezeigt.
   Vorteil: Diese Konstruktion ist in gewissem Maße dauerelastisch und verformbar und kann sich daher den örtlichen Gegebenheiten und deren möglichen Änderungen flexibel anpassen. Ein Nachdichten ist über das Nachziehen der vorhandenen Spannglieder durch Nachpressen der Fugen möglich.
- Variante B: Die Segmente werden über eine Vergussfuge mit Fugenblech und Verpressschlauch, z.B. als Zweitbetonverguss, verbunden. Gegebenenfalls kann für eine zweite Sicherungsebene ein außenliegendes Fugenband angeordnet werden. Ein Ausführungsbeispiel für eine dauerelastische Fuge mit Spanngliedern ist in Fig. 15 dargestellt. Darin sind zwei Stahlbetonelemente 37, deren Schnittstelle abgedichtet ist, ein optionales außenliegendes Fugenband 38, zugehörige Klemmleisten 39, eine Zweitbetonnische 45 mit Vergussstoff, ein Fugenblech/-Band 46 mit Umwehrung, zwei Verpressschläuche 47 mit Zugang im Tunnel/Stollen etc., Anschlussbewehrung 48 sowie ein bezüglich einer Innenseite des (Tunnel/Stollen/Rohr-)Segments innenliegendes Fugenband 42 gezeigt.

Die Herstellung der Fugen erfolgt vorzugsweise nach dem Einschwimmen und Absenken der einzelnen Segmente, z.B. durch Tauchermontage. Bei der Ausführungsplanung kann es von Vorteil sein, wenn so viele wie möglich Komponenten vorgefertigt werden und eine möglichst geringe Anzahl an örtlichen Arbeitsgängen verbleibt. Aus diesen Überlegungen kann die Variante A technologisch bevorzugt sein.

### 3.3 Auftriebssicherung

Ein wichtiges Thema bei der Herstellung des PSW ist die Absicherung der Konstruktion gegen den Auftrieb, denn der Hohlkörper besitzt in einem nicht vollständig gefluteten Zustand des erfindungsgemäßen PSW ein großes Luftvolumen, welches unter Umständen mit zusätzlichen Einrichtungen am Gewässerboden gehalten werden muss. Ein möglichst großer hydrostatischer Druck ist dabei für ein möglichst großes Einströmpotential zur Energieregeneration im PSW erfindungsgemäß erwünscht.

In Bezug auf die ggf. vorhandene zentrale Kaverne dürfte der Auftrieb durch das Eigengewicht aufgehoben werden: Eigenlasten aus massiven Wänden und Decken; Auflasten aus Wasserdruck; Eigengewicht der z.B. in den obigen Beispielen genannten Einbauten, ggf. Eigenlasten der nachträglich eingebrachten Betonmassen und ggf. Auflast aus dem Wetter- und Versorgungsschacht.

Durch eine kraftschlüssige Verspannung des mittleren Modules 3 (das ggf. die zentrale Kaverne enthält) mit den Modulen 1 und 2 sind auch diese gegen den Auftrieb gesichert. Für die Module 4 (Toskammer) und 5 (Speichermedium) können gesonderte Lösungen vorgesehen sein. Für eine Pilotanlage mit einem sternförmigen Tunnelsystem mit einem Querschnitt von 10 m Höhe und 20 m Breite sowie einer Wanddicke von ca. 2,0 m ist z.B. bei einer Meerestiefe von 50 m eine ausreichende Auftriebssicherheit vorhanden. Dennoch kann es von Vorteil sein, teilweise auf die Baumasse zu verzichten und dafür eine erhöhte Auftriebssicherung vorzusehen. Eine solche Möglichkeit wird im Folgenden beispielhaft dargestellt.

### Beispiel für eine zusätzliche Auftriebssicherung mit Geländeausgleich

Für eine Auftriebssicherung können bei in der Regel anstehenden Meeresbodenarten (z.B. mit mächtigen Schlick- und Sandschichten) beispielsweise Verpresspfähle, GEWI-Pfähle oder ähnliche Pfahlgründungen verwendet werden. Diese können z.B. in statisch erforderlichen Abständen beidseitig parallel der Tunnel- oder Rohrsegmente eingebracht werden. Dabei werden die gegenüberliegenden Pfähle z.B. über eine Stahlbetontraverse oder Stahllasche miteinander verbunden und halten das Tunnelsegment derart am Boden, dass es nicht aufschwimmt. Dennoch sollte dabei vorzugsweise ein Restauftrieb selbst bei der vollständigen Wasserbefüllung verbleiben (z.B. in der Belüftungsleitung oder Auftriebskörper), um ggf. ein Absinken auf den Meeresgrund zu vermeiden. Neben den möglichen Materialeinsparungen ergibt sich dabei unter Umständen auch ein genehmigungsrechtlicher Vorteil gegenüber einer bodengebundenen Variante: Es besteht die Möglichkeit, die Konstruktion so auszubilden, dass die Tunnelsegmente den Boden durch den verbleibenden Auftrieb nicht berühren und der Meeresboden daher quasi nicht versiegelt wird. Des Weiteren können gröbere Unebenheiten an Meeresgrund leicht ausgeglichen werden.

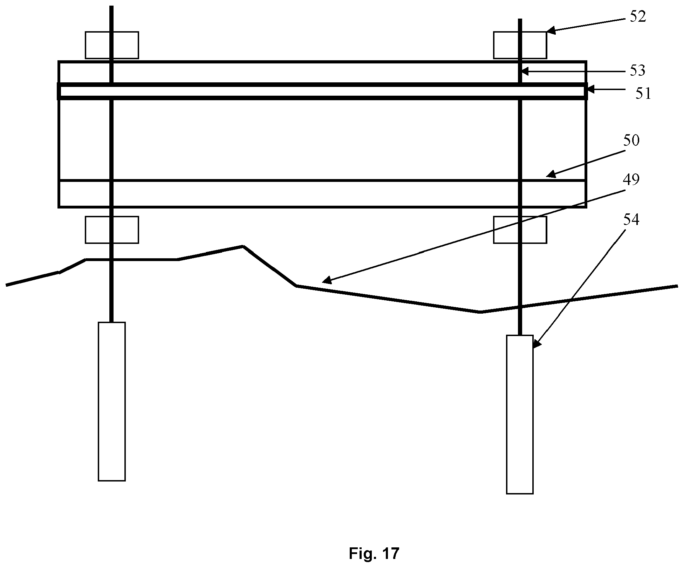

Ein Ausführungsbeispiel einer Auftriebssicherung eines Tunnels ist in Fig. 16 im Querschnitt und in Fig. 17 in einem Längsschnitt gezeigt. Dargestellt sind der Meeresboden 49, ein Tunnelsegment 50 mit einer Belüftungsleitung 51, Gurte/Traversen 52, Spannglieder 53 und Verpresskörper 54.

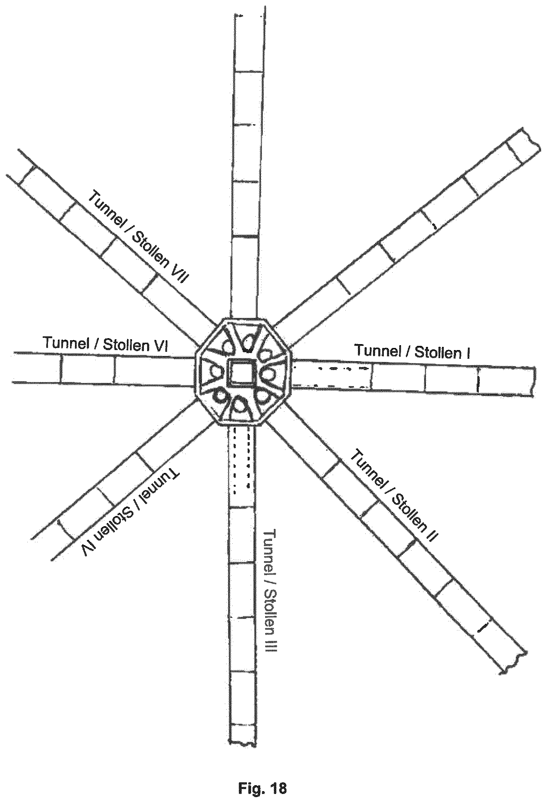

Einige spezifische Ausgestaltungen des erfindungsgemäßen PSW sind ferner schematisch in Figuren 18 bis 20 dargestellt.

Fig. 18 zeigt einen Grundriss einer spezifischen Ausgestaltung des PSW mit acht sternförmig angeordneten Tunneln, Stollen oder Rohren, die jeweils voneinander wasserdicht trennbare Segmente aufweisen und in ein zentral gelegenes Modul, z.B. eine zentrale Kaverne wie oben beschrieben, einbinden.

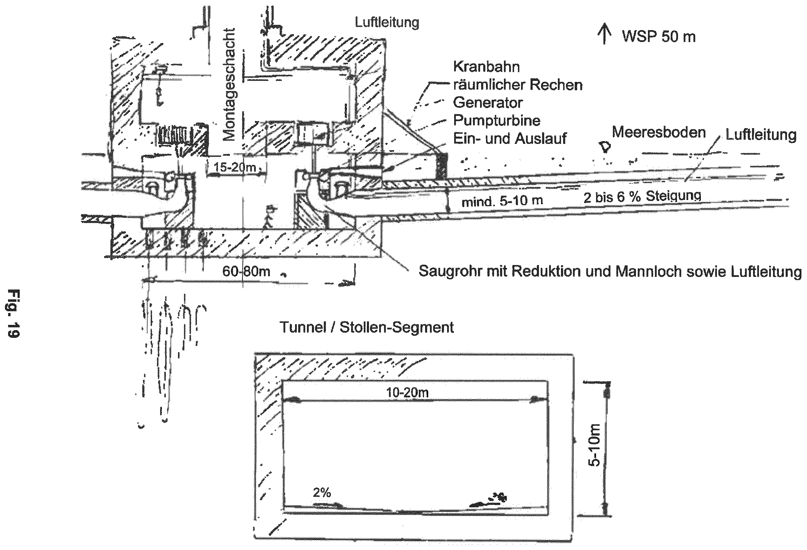

Fig. 19 zeigt links einen vertikalen Querschnitt einer spezifischen Ausgestaltung des unteren Teils eines PSW nach der Erfindung in einem Gewässer mit 50 m Wassertiefe. Es sind (in diesem Querschnitt) zwei Rohr- oder Stollen-förmige Abschnitte des Hohlkörpers gezeigt, die mit einer Steigung von 2 bis 6 % zu dem jeweils distalen Ende hin im Gewässerboden verlaufen und in einem zentralen Bauelement, z.B. einer Kaverne, münden. Entlang des gezeigten Rohrs/Stollens mit einem Durchmesser von 5 bis 10 m verläuft eine Luftleitung, die über das zentrale Bauelement in einem senkrechten Montageschacht mit einem Durchmesser von 15 bis 20 m nach oben geführt wird. Es sind ferner jeweils ein Saugrohr mit Reduktion und Mannloch sowie Luftleitung, ein Ein- und Auslauf, eine Pumpturbine und ein Generator für jeden der gezeigten Rohre/Stollen am kavernenseitigen Ende vorgesehen. Ferner ist in einem unteren Teil des Montageschachts eine Kranbahn angeordnet.

Fig. 19 zeigt rechts einen vertikalen Querschnitt einer spezifischen Ausgestaltung eines Abschnitts eines Hohlkörpers nach der Erfindung, hier eines Tunnel- bzw. Stollen- oder Rohr-Segments mit einem Rechteckprofil, einer inneren Breite von 10 bis 20 m und einer inneren Höhe von 5 bis 10 m. Die Tunnel-, Stollen- bzw. Rohrsohle weist innenseitig in diesem Beispiel einen leichten Anstieg von ca. 2% von der Mitte zu den beiden Seitenwänden hin.

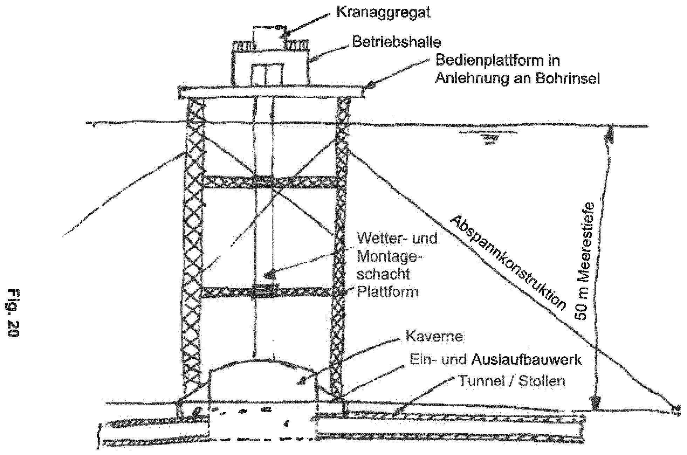

Fig. 20 zeigt einen vertikalen Querschnitt einer spezifischen Ausgestaltung eines erfindungsgemäßen PSW in voller Höhe. Die Wassertiefe (hier Meerestiefe) kann in dem gezeigten Beispiel 50m und mehr betragen. Dargestellt sind Tunnel oder Stollen als Teile (Abschnitte) des Hohlkörpers, die horizontal bzw. mit einer nur geringfügigen (nicht gezeigt) Steigung verlaufen, Ein- und Auslaufbauwerke, eine zentrale Kaverne, ein Wetter- und Montageschacht und eine Abspannkonstruktion im Meereskörper. Oberhalb der Meeresoberfläche sind an/über dem Wetter- und Versorgungsschacht eine Bedienplattform, z.B. in Anlehnung an eine Bohrinsel ausgestaltet, eine Betriebshalle sowie ein Kranaggregat vorgesehen.

## Patentansprüche

1. Pumpspeicherwerk in einem Gewässer (7), umfassend
- einen künstlichen wasserdichten, abschließbaren Hohlkörper (1), ,
- eine Be- und Entlüftungsleitung, die den Hohlkörper (1) mit der Oberfläche (8) des Gewässers (7) verbindet, und
- ein Maschinenhaus (3) mit Anschluss an den Hohlkörper (1), in welchem
eine Pumpe (4) zum Abpumpen des Wassers aus dem Hohlkörper (1) und
eine Turbine (6) zur Stromerzeugung beim Fluten des Hohlkörpers mit Wasser angeordnet sind, wobei die Turbine (6) tiefer als die Sohle des Hohlkörpers (1) angeordnet ist,
wobei der Hohlkörper (1) in einem Boden (2) des Gewässers (7) angeordnet ist und das Pumpspeicherwerk einen Revisionsschacht (5) zur Wartung des Pumpspeicherwerks aufweist, der von der Oberfläche (8) des Gewässers (7) bis zum Maschinenhaus (3) und/oder bis zum Hohlkörper (1) reicht.

2. Pumpspeicherwerk nach Anspruch 1, bei dem die Pumpe (4) zur Herstellung eines vorbestimmten Ansaugdrucks tiefer als die Sohle des Hohlkörpers (1) angeordnet ist

3. Pumpspeicherwerk nach einem der voranstehenden Ansprüche, bei dem der Hohlkörper (1) in Richtung der Pumpe (4) und/oder der Turbine (6) abfällt und seinen höchsten Punkt am gegenüberliegenden Ende hat.

4. Pumpspeicherwerk nach einem der voranstehenden Ansprüche, das in Modulen aufgebaut ist, wobei das Maschinenhaus (3) und der Hohlkörper (1) als einzelne Module im Boden des Gewässers (7) bergmännisch aufgefahren sind.

5. Pumpspeicherwerk nach einem der voranstehenden Ansprüche, bei dem das Maschinenhaus (3) als zentrale Maschinenkaverne ausgestaltet ist und der Hohlkörper die Form von Speicherstollen (14) aufweist, die von der Maschinenkaverne ausgehen

6. Pumpspeicherwerk nach einem der voranstehenden Ansprüche, bei dem die Ein- und Ausströmöffnung der Be- und Entlüftungsleitung (15) am Hochpunkt des Hohlkörpers (1) liegt

7. Pumpspeicherwerk nach einem der voranstehenden Ansprüche, dessen Hohlkörper (1) voneinander wasserdicht trennbare Abschnitte aufweist.

8. Pumpspeicherwerk nach einem der voranstehenden Ansprüche, dessen Hohlkörper (1) als ein sternförmiges Stollen- oder Tunnel-System ausgebildet ist.

9. Pumpspeicherwerk nach einem der voranstehenden Ansprüche, bei dem die Pumpe (4) und die Turbine (6) in einer Pumpturbine vereinigt sind.

10. Pumpspeicherwerk nach einem der voranstehenden Ansprüche, bei dem eine Toskammer (11) zur Umwandlung einer turbulenten in eine laminare Strömung vorgesehen ist.

11. Pumpspeicherwerk nach einem der voranstehenden Ansprüche, wobei das Gewässer (7) ein Meer, ein See oder eine Talsperre ist.

12. Verfahren zum Speichern und Freigeben von Energie mit Hilfe eines Pumpspeicherwerks nach einem der voranstehenden Ansprüche, umfassend die Schritte:
- Entleeren des Hohlkörpers (1) durch das Verdrängen von Wasser aus dem Hohlkörper gegen den seitens des Gewässers (7) auf den Hohlkörper wirkenden hydrostatischen Druck mit Hilfe der Pumpe (4),
- Fluten des Hohlkörpers mit Wasser durch die Turbine (6) und
- Einspeisen der über die Turbine gewonnenen Energie mit Hilfe von Generatoren und Transformatoren in ein Stromnetz.

13. Verfahren nach Anspruch 12, bei dem das Anfahren der Pumpe (4) gegen den hydrostatischen Druck vor oder bei dem Entleeren des Hohlkörpers und das Anfahren der Turbine (6) vor oder bei dem Fluten des Hohlkörpers (1) durch ein kontrolliertes Öffnen einer Absperreinrichtung zum Öffnen und Schließen des Hohlkörpers mittels einer Steuerungseinheit gesteuert wird.

14. Verfahren nach Anspruch 12 oder 13, bei dem das Entleeren oder das Fluten einzelner wasserdicht voneinander trennbarer Abschnitte des Hohlkörpers (1) hintereinander oder parallel erfolgt.

## Claims

1. A pump storage plant in a body of water (7), comprising
- an artificial watertight, lockable hollow body (1),
- an aeration and deaeration pipe connecting the hollow body (1) to the surface (8) of the body of water (7), and
- a machine house (3) connected to the hollow body (1), comprising
a pump (4) for pumping the water out of the hollow body (1) and
a turbine (6) for generating electricity when the hollow body is flooded with water, the turbine (6) being arranged lower than the bottom of the hollow body (1),
wherein the hollow body (1) is arranged in a bottom (2) of the body of water (7) and the pump storage plant has an inspection shaft (5) for maintenance of the pump storage plant which extends from the surface (8) of the body of water (7) to the machine house (3) and/or to the hollow body (1).

2. The pump storage device of claim 1, wherein the pump (4) is positioned lower than the bottom of the hollow body (1) to provide a predetermined suction pressure.

3. The pump storage device according to any of the preceding claims, wherein the hollow body (1) slopes downwards in the direction of the pump (4) and/or the turbine (6) and has its highest point at the opposite end.

4. The pump storage plant according to one of the preceding claims, which is constructed in modules, wherein the machine house (3) and the hollow body (1) are excavated as individual modules in the bottom of the body of water (7).

5. The pump storage plant according to any of the preceding claims, in which the machine house (3) is designed as a central machine cavern and the hollow body is in the form of storage galleries (14) extending from the machine cavern.

6. The pump storage plant according to one of the preceding claims, in which the inflow and outflow opening of the aeration and deaeration pipe (15) is located at the high point of the hollow body (1).

7. The pump storage plant according to one of the preceding claims, wherein its hollow body (1) has sections which can be separated from one another in a watertight manner.

8. The pump storage plant according to one of the preceding claims, wherein its hollow body (1) is designed as a star-shaped gallery or tunnel system.

9. The pump storage plant according to any of the preceding claims, in which the pump (4) and the turbine (6) are combined in a pump turbine.

10. The pump storage plant according to any of the preceding claims, in which a cushioning chamber (11) is provided for converting a turbulent flow into a laminar flow.

11. The pump storage plant according to any of the preceding claims, wherein the body of water (7) is a sea, a lake, or a dam.

12. A method of storing and releasing energy by means of a pump storage plant according to any one of the preceding claims, comprising the steps of:
- emptying the hollow body (1) by displacing water from the hollow body (7) against the hydrostatic pressure acting on the hollow body from the side of the body of water with the help of the pump (4),
- flooding the hollow body with water through the turbine (6) and
- feeding the energy generated via the turbine into a power grid with the help of generators and transformers.

13. The method according to claim 12, wherein the start-up of the pump (4) against the hydrostatic pressure before or during the emptying of the hollow body and the start-up of the turbine (6) before or during the flooding of the hollow body is controlled by a controlled opening of a shut-off device for opening and closing the hollow body by means of a control unit.

14. Method according to claim 12 or 13, in which the emptying or flooding of individual sections of the hollow body (1) which can be separated from one another in a watertight manner takes place in succession or in parallel.

## Revendications

1. Centrale à accumulation par pompage dans une étendue d'eau (7), comprenant
- un corps creux artificiel (1) qui est étanche et peut être verrouillé (1),
- une ligne d'aération et de ventilation, qui relie le corps creux (1) à la surface (8) de l'étendue d'eau (7), et
- un logement de machine (3) qui se raccorde au corps creux (1), dans laquelle sont disposées
une pompe (4) destinée au pompage de l'eau à partir du corps creux (1) et
une turbine (6) destinée à la production d'électricité lors de l'écoulement d'eau dans le corps creux, la turbine (6) étant disposée plus en profondeur que la semelle du corps creux (1),
dans laquelle le corps creux (1) est disposé dans un fond (2) de l'étendue d'eau (7) et la centrale à accumulation par pompage présente un regard (5) destiné à la maintenance de la centrale à accumulation par pompage et qui s'étend à partir de la surface (8) de l'étendue d'eau (7) jusqu'au logement de machine (3) et/ou jusqu'au corps creux (1).

2. Centrale à accumulation par pompage selon la revendication 1, dans laquelle la pompe (4) est disposée plus en profondeur que la semelle du corps creux (1) pour produire une pression d'aspiration prédéfinie.

3. Centrale à accumulation par pompage selon une des revendications précédentes, dans laquelle le corps creux (1) s'abaisse en direction de la pompe (4) et/ou de la turbine (6) et a son point le plus haut à l'extrémité opposée.

4. Centrale à accumulation par pompage selon une des revendications précédentes, qui est construite en modules, dans laquelle le logement de machine (3) et le corps creux (1) sont entraînés par des moyens souterrains au fond de l'étendue d'eau (7) en tant que modules individuels.

5. Centrale à accumulation par pompage selon une des revendications précédentes, dans laquelle le logement de machine (3) est configuré sous la forme d'une caverne de machine centrale et le corps creux a la forme de galeries d'accumulation (14) qui partent de la caverne de machine.

6. Centrale à accumulation par pompage selon une des revendications précédentes, dans laquelle l'ouverture d'admission et d'évacuation de la ligne d'aération et de ventilation (15) se trouve au point haut du corps creux (1).

7. Centrale à accumulation par pompage selon une des revendications précédentes, dont le corps creux (1) présente des sections étanches qui peuvent être séparées les unes des autres.

8. Centrale à accumulation par pompage selon une des revendications précédentes, dont le corps creux (1) est réalisé sous la forme d'un système de galeries ou de tunnels en étoile.

9. Centrale à accumulation par pompage selon une des revendications précédentes, dans laquelle la pompe (4) et la turbine (6) sont réunies en une pompe à inversion.

10. Centrale à accumulation par pompage selon une des revendications précédentes, dans laquelle une chambre d'amortissement (11) est prévue pour transformer un écoulement turbulent en un écoulement laminaire.

11. Centrale à accumulation par pompage selon une des revendications précédentes, dans laquelle l'étendue d'eau (7) est une mer, un lac ou un barrage.

12. Procédé destiné à accumuler et libérer de l'énergie à l'aide d'une centrale à accumulation par pompage selon une des revendications précédentes, comprenant les étapes :
- vidage du corps creux (1) par le refoulement de l'eau en dehors du corps creux sous la pression hydrostatique qui agit du côté de l'étendue d'eau (7) sur le corps creux à l'aide de la pompe (4),
- écoulement d'eau dans le corps creux par le biais de la turbine (6) et
- alimentation d'un réseau électrique en énergie obtenue par l'intermédiaire de la turbine à l'aide de générateurs et de transformateurs.

13. Procédé selon la revendication 12, dans lequel le démarrage de la pompe (4) sous la pression hydrostatique en amont ou lors du vidage du corps creux et le démarrage de la turbine (6) en amont ou lors de l'écoulement dans le corps creux (1) est commandé à l'aide d'une unité de commande par une ouverture contrôlée d'un moyen de barrage destiné à ouvrir et fermer le corps creux.

14. Procédé selon la revendication 12 ou 13, dans lequel le vidage de sections individuelles étanches du corps creux (1) qui peuvent être séparées les unes des autres, ou l'écoulement dans celles-ci, se fait successivement ou parallèlement.
